# EUROPEAN PATENT SPECIFICATION

(11) **EP 1 531 101 B1**
(45) Date of publication of this specification: **03.08.2011**
(45) Mention of the grant of the patent: 03.08.2020
(21) Application number: 04026699.1
(22) Date of filing: 10.11.2004
(51) Int. Cl.: B60T 8/17, B60T 8/88

(54) **Antilock brake controlling method**
Blockierschutz-Bremssteuerungsverfahren
Procédé de commande de freinage anti-blocage

(30) Priority: 17.11.2003 JP 2003387031
(43) Date of publication of application: 18.05.2005
(73) Proprietor: HONDA MOTOR CO., LTD., Tokyo (JP)
(72) Inventor: Yoshida, Hiroyuki, 4-1 Chuo 1- chome, Wako-shi, Saitama (JP); Toda, Makoto, 4-1 Chuo 1-chome, Wako-shi, Saitama (JP); Goto, Shinji, 4-1 Chuo 1-chome, Wako-shi, Saitama (JP); Tanaka, Keishin, 4-1 Chuo 1-chome, Wako-shi, Saitama (JP)
(74) Representative: Liska, Horst

(56) References cited:
- EP-A- 0 449 118
- EP-A- 1 059 217
- EP-A2- 0 524 821
- EP-A2- 0 778 189
- US-A- 3 797 893
- US-A- 5 324 102
- US-A1- 2002 108 797
- US-A1- 2003 028 309
- US-B1- 6 312 066
- US-B1- 6 321 155

## Description

This invention relates to an antilock brake controlling method.

A conventional antilock brake controlling method is known as follows. Outputs of speed sensors provided for front and rear wheels are arithmetically operated and processed and antiskid control is performed based on the resulting wheel speeds (refer to, for example, Japanese Patent No. 3445458). Another method is that vehicle body acceleration is detected by means of an acceleration sensor and antiskid control is performed based on the acceleration signal (refer to, for example, Japanese Patent Laid-open No. Hei 7-179169)_{.}

Further, a method is known wherein, when it is considered in antilock brake control that an output signal from a speed sensor is abnormal, it is diagnosed that an antilock brake controlling mechanism such as the speed sensor is abnormal and a warning is issued to a driver using a warning lamp or the like to urge the driver to perform repair and then antilock brake control is inhibited.

Incidentally, a vehicle may travel on a road surface having comparatively large roughness and having a low coefficient of friction such as a gravel road, a forest road, or an off road circuit, that is, on an off road. In that case, the vehicle is sometimes stuck (a state wherein a driving wheel slips to disable movement of the vehicle) or sometimes jumps on a projected road surface and is braked when the vehicle flies for a comparatively long period of time (jumping of a motorcycle is used as means for positively controlling the posture of the vehicle body), although the situation described is not likely to occur on a road surface which is comparatively flat and has a high coefficient of friction such as a pavement. If the vehicle is stuck or jumps in such a manner as described above, then since a signal from a speed sensor for each wheel is placed out of a normal signal state, even if the antilock brake controlling mechanism is actually free from a fault, there is the possibility that it may be diagnosed that the antilock brake controlling mechanism is in a fault state. (In the former case, it is diagnosed that the wheel speed sensor for a driven wheel is abnormal or the like. In the latter case, if any of the wheels is braked while the vehicle is in the air, then the wheel continues to be in a substantially locked state and besides the vehicle speed does not drop. Consequently, it may be diagnosed that the sensor for the wheel is abnormal. In both cases, the antilock brake controlling mechanism may be diagnosed as being abnormal.)

Since, in off road traveling, a vehicle is stuck or jumps more frequently than in traveling on a pavement, it is cumbersome that a fault warning of the antilock brake controlling mechanism is issued every time or a countermeasure is taken every time the antilock brake controlling mechanism is disabled. Therefore, an antilock brake controlling method for exclusive use for an off road is demanded wherein issuance of a fault warning or inhibition of antilock brake control by a diagnosis as a fault is less likely to occur.

EP 0 449 118 A or US 6 312 066 B discloses an antilock brake controller with a correction for rough road respectively offroad driving in accordance with the preamble of claims 1, 3 and 4.

It is an object of the present invention to prevent, in an antilock brake controlling method, issuance of a fault warning or inhibition of antilock brake control by a diagnosis as a fault of an antilock brake controlling mechanism arising from being stuck or jumping during off road traveling and further simplify the antilock brake control during normal traveling.

According to claim 1, the object is achieved by an antilock brake controlling method for performing antilock brake control of a vehicle, which includes a plurality of wheels, a brake apparatus provided for each of at least one driving wheel and one driven wheel from among said wheels, and an antilock brake control apparatus provided for the brake apparatus, in response to a situation of a road surface on which said vehicle travels based on rotational speeds of the wheels detected by wheel speed sensors for the wheels individually provided in the antilock brake control apparatus, wherein it is discriminated by an off road discrimination section whether or not the situation of the road surface is an off road, based on the discrimination, the antilock brake control is changed over by an antilock control method changeover section between a normal traveling antilock brake control mode for traveling on a road surface having a high coefficient of friction such as pavement and an off road traveling antilock control mode for traveling on a road surface having comparatively great roughness and having a low coefficient of friction such as a gravel road, characterized in that, in the normal traveling antilock control mode, the rotational speed of a wheel A and the rotational speed of another wheel B are detected, and the antilock brake control is inhibited where the rotational speed of the wheel A is lower than the rotational speed of the wheel B or the period of time within which the rotational speed of the wheel A is higher than the rotational speed of the wheel B exceeds a first predetermined time period, but in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period, only if the wheel whose rotational speed is lower is the driven wheel and the acceleration of rotation of the wheel is lower than an absolute value of a preset negative wheel rotational acceleration for a second predetermined time period, it is determined that said vehicle is jumping and the antilock brake control is not inhibited or inhibition starting time at which the antilock brake control is to be inhibited is postponed.

On a normal traveling road surface having a high coefficient of friction such as a pavement, the possibility that the vehicle may be stuck or jump is low. Therefore, normal traveling antilock brake control is performed as in the conventional art. However, when the vehicle travels on a road surface having comparatively great roughness and having a low coefficient of friction such as a gravel road, that is, on an off road, the antilock brake control is changed over to the off road traveling antilock control mode.

Even if the vehicle jumps on an off road, the vehicle can travel while inhibition of antilock brake control or issuance of a fault warning based on a diagnosis of a fault does not occur. Further, only the wheel speed information from the existing wheel speed sensors is used for the discrimination to achieve simplification of the control system.

According to claim 2, the antilock brake controlling method is characterized in that, in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period, only if the wheel whose rotational speed is lower is the driven wheel and the rotational speed of the wheel is lower than a preset minimum wheel rotational speed for a second predetermined time period, it is determined that said vehicle is stuck and the antilock brake control is not inhibited or inhibition starting time at which the antilock brake control is to be inhibited is postponed.

Even if the vehicle is stuck or jumps on an off road, the vehicle can travel while inhibition of antilock brake control or issuance of a fault warning based on a diagnosis of a fault does not occur. Further, only the wheel speed information from the existing wheel speed sensors is used for the discrimination to achieve simplification of the control system.

According to claim 3, the object is achieved by an antilock brake controlling method for performing antilock brake control of a vehicle, which includes a plurality of wheels, a brake apparatus provided for each of at least one driving wheel and one driven wheel from among said wheels, and an antilock brake control apparatus provided for the brake apparatus, in response to a situation of a road surface on which said vehicle travels based on rotational speeds of the wheels detected by wheel speed sensors for the wheels individually provided in the antilock brake control apparatus, wherein it is discriminated by an off road discrimination section whether or not the situation of the road surface is an off road, based on the discrimination, the antilock brake control is changed over by an antilock control method changeover section between a normal traveling antilock brake control mode for traveling on a road surface having a high coefficient of friction such as pavement and an off road traveling antilock control mode for traveling on a road surface having comparatively great roughness and having a low coefficient of friction such as a gravel road, characterized in that, in the normal traveling antilock control mode, the rotational speed of a wheel A and the rotational speed of another wheel B are detected, and the antilock brake control is inhibited where the rotational speed of the wheel A is lower than the rotational speed of the wheel B or the period of time within which the rotational speed of the wheel A is higher than the rotational speed of the wheel B exceeds a first predetermined time period and where, when any of said wheels is braked, the vehicle speed exceeds a predetermined value for a third predetermined time period after the rotational speed of the wheel is slowed down to become lower than a preset minimum wheel rotational speed, but in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period, only if the wheel whose rotational speed is lower is the driven wheel and the rotational speed of the last-mentioned wheel is lower than a preset minimum wheel rotational speed for a second predetermined time period, it is determined that said vehicle is stuck and the antilock brake control is not inhibited or inhibition starting time at which the antilock brake control is to be inhibited is postponed, and when any of said wheels is braked, even if the vehicle speed exceeds the predetermined value for the third predetermined time period after the rotational speed of the wheel is slowed down to become lower than the preset minimum wheel rotational speed, if an absolute value of a negative wheel rotational acceleration when the rotational speed of the wheel is slowed down to become lower than the minimum wheel rotational speed is lower than a first predetermined value, then it is determined that said vehicle is jumping and the third predetermined time period is elongated, but only when the rotational acceleration of the wheel becomes a positive wheel rotational acceleration higher than a second predetermined value before the third predetermined time period elapses, the antilock brake control is not inhibited.

Even if the brake is operated when the vehicle is stuck on an off road or while the vehicle is in the air when the vehicle jumps by a great amount on an off road, the vehicle can travel while inhibition of antilock brake control or issuance of a fault warning based on a diagnosis of a fault does not occur. Further, only the wheel speed information from the existing wheel speed sensors is used for the discrimination to achieve simplification of the control system.

According to claim 4, the object is achieved by an antilock brake controlling method for performing antilock brake control of a vehicle, which includes a plurality of wheels, a brake apparatus provided for each of at least one driving wheel and one driven wheel from among said wheels, and an antilock brake control apparatus provided for the brake apparatus, in response to a situation of a road surface on which said vehicle travels based on rotational speeds of the wheels detected by wheel speed sensors for the wheels individually provided in the antilock brake control apparatus, wherein it is discriminated by an off road discrimination section whether or not the situation of the road surface is an off road, based on the discrimination, the antilock brake control is changed over by an antilock control method changeover section between a normal traveling antilock brake control mode for traveling on a road surface having a high coefficient of friction such as pavement and an off road traveling antilock control mode for traveling on a road surface having comparatively great roughness and having a low coefficient of friction such as a gravel road, characterized in that said antilock brake controlling apparatus includes a suspension elongation length detection section for detecting the length of elongation of a suspension, and in the normal traveling antilock control mode, the rotational speed of a wheel A and the rotational speed of another wheel B are detected, and the antilock brake control is inhibited where the rotational speed of the wheel A is lower than the rotational speed of the wheel B or the period of time within which the rotational speed of the wheel A is higher than the rotational speed of the wheel B exceeds a first predetermined time period and besides, when any of said wheels is braked, where the vehicle speed exceeds a predetermined value for a third predetermined time period after the rotational speed of the wheel is slowed down to become lower than a preset minimum wheel rotational speed, the antilock brake control is inhibited, but in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period, only if the wheel whose rotational speed is lower is the driven wheel and the rotational speed of the last-mentioned wheel is lower than a preset minimum wheel rotational speed for a second predetermined time period, it is determined that said vehicle is stuck and the antilock brake control is not inhibited or inhibition starting time at which the antilock brake control is to be inhibited is postponed, and besides, when any of said wheels is braked, even if the vehicle speed exceeds the predetermined value for the third predetermined time period after the rotational speed of the wheel is slowed down to become lower than the preset minimum wheel rotational speed, only where a state wherein the elongation length of the suspension detected by said suspension elongation length detection section is greater than a predetermined value is maintained for a fourth predetermined time period, it is determined that said vehicle is jumping and the antilock brake control is not inhibited or inhibition starting time at which the antilock brake control is to be inhibited is postponed.

Even if the brake is operated when the vehicle is stuck on an off road or while the vehicle is in the air when the vehicle jumps by a great amount on an off road, the vehicle can travel while inhibition of antilock brake control or issuance of a fault warning based on a diagnosis of a fault does not occur.

According to the invention, it is discriminated by the off road discrimination section whether or not the situation of the road surface is an off road, and based on the discrimination, the antilock brake control is changed over by the antilock control method changeover section between the normal traveling antilock brake control mode and the off road traveling antilock control mode. Consequently, even if the vehicle is stuck or jumps during off road traveling, the vehicle can travel while inhibition of antilock brake control or issuance of a fault warning based on a diagnosis of a fault does not occur.

Further, for example, in normal traveling which is used in a very high frequency, since a control menu as in the conventional art which is comparatively simple with respect to a control menu for an off road, reduction of the power consumption and execution of rapid control can be achieved comparatively readily.

According to the invention as set forth in claim 1, in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period, only if the wheel whose rotational speed is lower is the driven wheel and the acceleration of rotation of the wheel is lower than an absolute value of a preset negative wheel rotational acceleration for a second predetermined time period, it is determined that the vehicle is jumping and the antilock brake control is not inhibited or inhibition starting time at which the antilock brake control is to be inhibited is postponed. Consequently, even if the vehicle jumps on an off road, the vehicle can travel while inhibition of antilock brake control or issuance of a fault warning based on a diagnosis of a fault does not occur. Further, only the wheel speed information from the existing wheel speed sensors is used for the discrimination to achieve simplification of the control system.

According to the invention as set forth in claim 2, in the off road traveling antilock control mode, the rotational speed of the wheel A and the rotational speed of the wheel B are detected and, even if the rotational speed of the wheel A is lower than the rotational speed of the wheel B or the period of time within which the speed of rotation of the wheel A is higher than the rotational speed of the wheel B exceeds the first predetermined time period, only if the wheel whose rotational speed is lower is the driven wheel and the rotational speed of the wheel is lower than a preset minimum wheel rotational speed for a second predetermined time period, it is determined that the vehicle is stuck and the antilock brake control is not inhibited or inhibition starting time at which the antilock brake control is to be inhibited is postponed. Besides, only if the wheel whose rotational speed is lower is the driven wheel and the acceleration of rotation of the wheel is lower than an absolute value of a preset negative wheel rotational acceleration for a second predetermined time period, it is determined that the vehicle is jumping and the antilock brake control is not inhibited or inhibition starting time at which the antilock brake control is to be inhibited is postponed. Consequently, even if the vehicle is stuck or jumps on an off road, the vehicle can travel while inhibition of antilock brake control or issuance of a fault warning based on a diagnosis of a fault does not occur. Further, only the wheel speed information from the existing wheel speed sensors is used for the discrimination to achieve simplification of the control system.

According to the invention as set forth in claim 3, in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel.A is higher than the rotational speed of the wheel B exceeds the first predetermined time period, only if the wheel whose rotational speed is lower is the driven wheel and the rotational speed of the last-mentioned wheel is lower than a preset minimum wheel rotational speed for a second predetermined time period, it is determined that the vehicle is stuck and the antilock brake control is not inhibited or inhibition starting time at which the antilock brake control is to be inhibited is postponed. Further, when any of the wheels is braked, even if the vehicle speed exceeds the predetermined value for the third predetermined time period after the rotational speed of the wheel is slowed down to become lower than the preset minimum wheel rotational speed, if an absolute value of a negative wheel rotational acceleration when the rotational speed of the wheel is slowed down to become lower than the minimum wheel rotational speed is lower than a first predetermined value, then it is determined that the vehicle is jumping and the third predetermined time period is elongated, but only when the rotational acceleration of the wheel becomes a positive wheel rotational acceleration higher than a second predetermined value before the third predetermined time period elapses, the antilock brake control is not inhibited. Consequently, even if the brake is operated when the vehicle is stuck on an off road or while the vehicle is in the air when the vehicle jumps by a great amount on an off road, the vehicle can travel while inhibition of antilock brake control or issuance of a fault warning based on a diagnosis of a fault does not occur. Further, only the wheel speed information from the existing wheel speed sensors is used for the discrimination to achieve simplification of the control system.

According to the invention as set forth in claim 4, the antilock brake controlling mechanism includes a suspension elongation length detection section for detecting the length of elongation of a suspension. Further, in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period, only if the wheel whose rotational speed is lower is the driven wheel and the rotational speed of the last-mentioned wheel is lower than a preset minimum wheel rotational speed for a second predetermined time period, it is determined that the vehicle is stuck and the antilock brake control is not inhibited or inhibition starting time at which the antilock brake control is to be inhibited is postponed. Besides, when any of the wheels is braked, even if the vehicle speed exceeds the predetermined value for the third predetermined time period after the rotational speed of the wheel is slowed down to become lower than the preset minimum wheel rotational speed, only where a state wherein the elongation length of the suspension detected by the suspension elongation length detection section is greater than a predetermined value is maintained for a fourth predetermined time period, it is determined that the vehicle is jumping and the antilock brake control is not inhibited or inhibition starting time at which the antilock brake control is to be inhibited is postponed. Consequently, even if the brake is operated when the vehicle is stuck on an off road or while the vehicle is in the air when the vehicle jumps by a great amount on an off road, the vehicle can travel while inhibition of antilock brake control or issuance of a fault warning based on a diagnosis of a fault does not occur.

The best mode for carrying out the invention is described below with reference to the accompanying drawings. It is to be noted that the drawings should be viewed in the direction of reference characters.
FIG. 1 is a side elevational view of a motorcycle equipped with an ABS which adopts an antilock brake controlling method according to the present invention.
FIG. 2 is a block diagram of a brake apparatus for which the ABS according to the present invention is provided.
FIG. 3 is a detailed block diagram of the brake apparatus for which the ABS according to the present invention is provided.
FIG. 4 is a block diagram of a control apparatus according to the present invention.
FIG. 5 is a graph illustrating states upon acceleration and upon being stuck on an off road.
FIG. 6 is a graph illustrating a state upon jumping on an off road.
FIG. 7 is another graph illustrating a state upon jumping on an off road.
FIG. 8 is another graph illustrating a state upon jumping on an off road in detail.
FIG. 9 is a flow chart illustrating a first embodiment of an antilock brake controlling method according to the present invention.
FIG. 10 is a flow chart illustrating a second embodiment of an antilock brake controlling method according to the present invention.
FIG. 11 is a flow chart illustrating a third embodiment of an antilock brake controlling method according to the present invention.
FIG. 12 is a flow chart illustrating a fourth embodiment of an antilock brake controlling method according to the present invention.
FIG. 13 is a flow chart illustrating a fifth embodiment of an antilock brake controlling method according to the present invention.
FIG. 14 is a flow chart illustrating a sixth embodiment of an antilock brake controlling method according to the present invention.
FIG. 15 is a flow chart illustrating a seventh embodiment of an antilock brake controlling method according to the present invention.
FIG. 16 is a flow chart illustrating an eighth embodiment of an antilock brake controlling method according to the present invention.
FIG. 17 is a flow chart illustrating a ninth embodiment of an antilock brake controlling method according to the present invention.
FIG. 18 is a block diagram of another embodiment of a controlling apparatus according to the present invention.

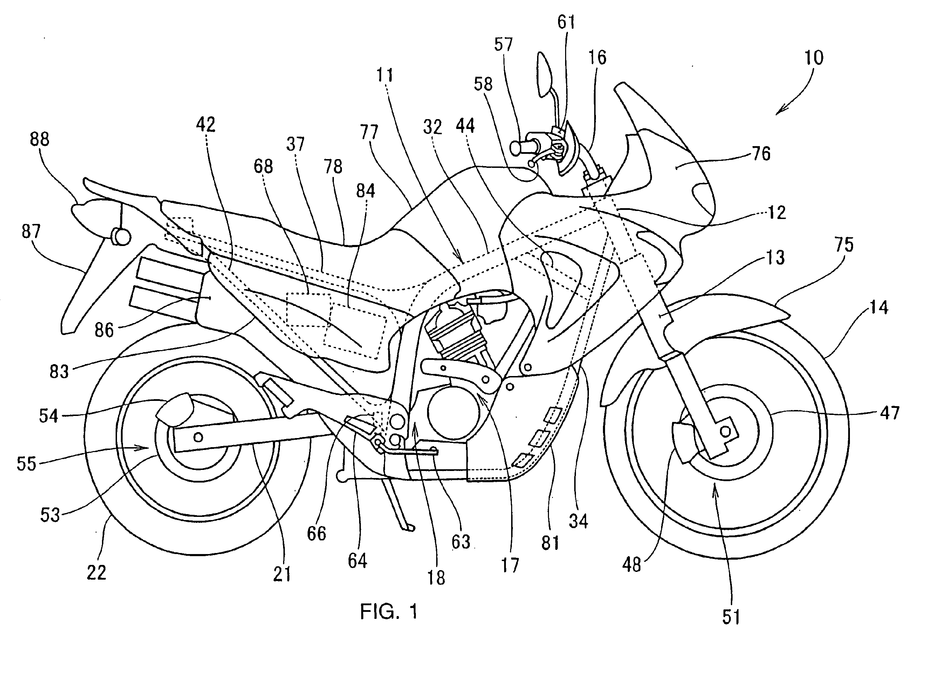

FIG. 1 is a side elevational view of a motorcycle including an ABS which adopts an antilock brake controlling method according to the present invention. The motorcycle 10 includes a front fork 13 attached for steering movement to a head pipe 12 provided at a front end of a vehicle body frame 11. A front wheel 14 serving as a driven wheel is attached to a lower portion of the front fork 13 while a bar handle 16 is attached to an upper portion of the front fork 13. An engine 17 and a transmission 18 connected integrally to the engine 17 are attached to the inner side of the vehicle body frame 11. A swing arm 21 is attached for upward and downward swinging movement at a lower portion of the vehicle body frame 11. A rear wheel 22 serving as a driving wheel is attached to a rear end of the swing arm 21. The motorcycle 10 incorporates an antilock brake system (ABS) described below for preventing locking of the front wheel 14 and the rear wheel 22 upon braking.

The vehicle body frame 11 includes left and right main frames 31, 32 (only reference numeral 32 on this side is shown) extending obliquely rearwardly downwards from the head pipe 12. The vehicle body frame 11 further includes left and right down frames 33, 34 (only reference numeral 34 on this side is shown) extending substantially downwardly from the head pipe 12 and then extending rearwardly and connected to lower ends of the main frames 31, 32, respectively. The vehicle body frame 11 further includes a pair of left and right seat rails 36, 37 (only reference numeral 37 on this side is shown) extending substantially horizontally rearwardly from bent portions of the main frames 31, 32, respectively. The vehicle body frame 11 further includes a pair of left and right seat stays 41, 42 (only reference numeral 42 on this side is shown) extending obliquely rearwardly upwards from lower portions of the main frames 31, 32 and connected to rear ends of the seat rails 36, 37, respectively. It is to be noted that reference numerals 43, 44 (only reference numeral 44 on this side is shown) denote reinforcing frames extending between the main frames 31, 32 and the down frames 33, 34, respectively.

The front wheel 14 has a brake disk 47 attached thereto, and the brake disk 47 and a brake caliper 48 attached to the front fork 13 for clamping and braking the brake disk 47 form a front wheel disk brake 51.

The rear wheel 22 has a brake disk 53 attached thereto, and the brake disk 53 and a brake caliper 54 attached to the swing arm 21 through a bracket for clamping and braking the brake disk 53 form a rear wheel disk brake 55.

The bar handle 16 is a part to which a throttle grip 57 for adjusting the opening of a throttle provided in an intake system of the engine 17, a front wheel brake lever 58 for braking the front wheel 14, and a first master cylinder 61 for generating a brake hydraulic pressure when the front wheel brake lever 58 is operated are attached.

Reference numeral 63 denotes a rear wheel brake for braking the rear wheel 22, and a bracket 64 is attached to a lower portion of the main frame 32 and a rear wheel brake pedal 63 is attached to the bracket 64.

Reference numeral 66 denotes a second master cylinder for generating a brake hydraulic pressure when the rear wheel brake pedal 63 is operated.
Reference numeral 68 denotes a modulator serving as a braking force adjusting apparatus which forms an ABS for adjusting the braking force to the front wheel 14 and the rear wheel 22 to prevent the front wheel 14 and the rear wheel 22 from being locked.

Reference numeral 75 denotes a front fender which covers the front wheel 14 from above, 76 a front cowl which covers a front portion of the vehicle body, 77 a fuel tank attached to upper portions of the main frames 31, 32, and 78 a seat attached to upper portions of the seat rails 36, 37. Further, reference numeral 81 denotes an engine guard for covering the engine 17 from forwardly, reference numerals 82, 83 (only reference numeral 83 on this side is shown) denote side covers which cover locations between the seat rails 36, 37 and the seat stays 41, 42 from sidewardly below the seat 78. Further, reference numeral 84 denotes a battery, 86 a muffler, 87 a rear fender which covers the rear wheel 22 from above, and 88 a tail lamp.

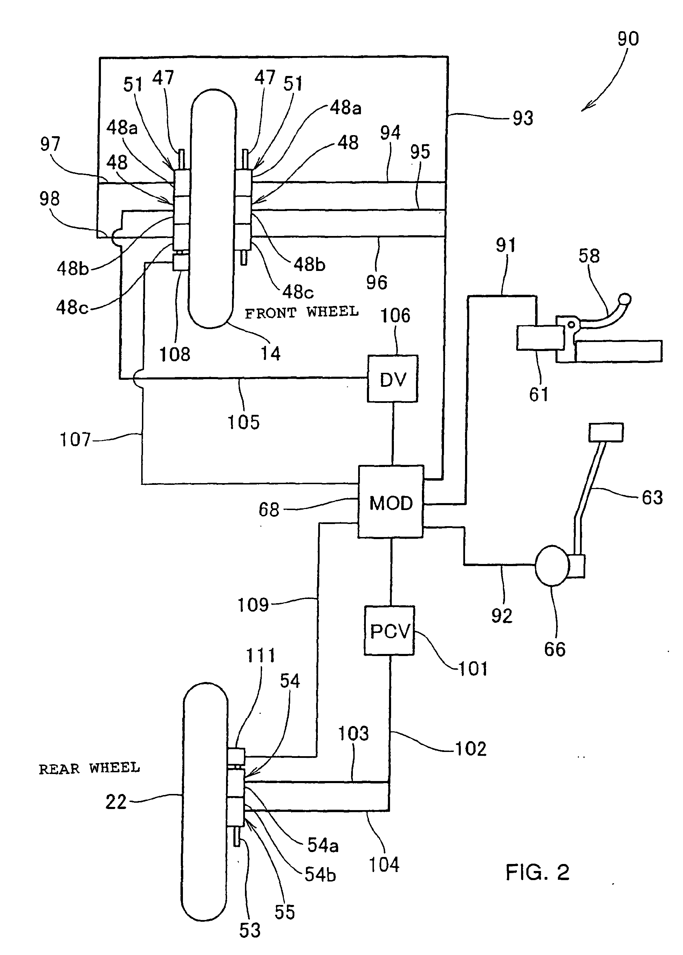

FIG. 2 is a block diagram of a brake system for which the ABS according to the present invention is provided. The brake system 90 includes the above-described front wheel brake lever 58, first master cylinder 61, rear wheel brake pedal 63, second master cylinder 66, modulator 68 connected to the first master cylinder 61 and the second master cylinder 66 by pipes 91, 92, respectively, and front wheel disk brakes 51, 51 (more particularly, brake calipers 48, 48) connected to the modulator 68 by pipes 93 to 98. The brake system 90 further includes the rear wheel disk brake 55 (more particularly, brake caliper 54) connected to the modulator 68 by pipes 102 to 104 through a pressure control valve (PCV) 101 for adjusting the brake hydraulic pressure. The brake system 90 further includes a delay valve (DV) 106 provided midway of a pipe 105, which interconnects one of the front wheel disk brakes 51 (more particularly, one of the brake calipers 48) and the modulator 68, for distributing, when the rear wheel brake pedal 63 is operated, the hydraulic pressure of the brake fluid also to the front wheel disk brakes 51 and delaying the hydraulic pressure distribution to the front wheel disk brakes 51 side with respect to that to the rear wheel disk brake 55 side. The brake system 90 further includes a front wheel speed sensor 108 connected to the modulator 68 by a wire 107 for detecting the speed of rotation of the front wheel 14 (that is, the wheel speed), and a rear wheel speed sensor 111 connected to the modulator 68 by a wire 109 for detecting the speed of rotation of the rear wheel 22.

Reference characters 48a, 48b, 48c denote cylinders provided in the brake caliper 48 for accommodating pistons, which generate pressing force for clamping the brake disks 47, for movement therein. Further, reference characters 54a, 54b denote cylinders provided in the brake caliper 54 for accommodating pistons, which generate pressing force for clamping the brake disk 53, for movement therein. Further, in FIG. 2, each pipe for the brake fluid is indicated by a thick line, and each conductor is indicated by a thin line. (This similarly applies also to the succeeding figures.)

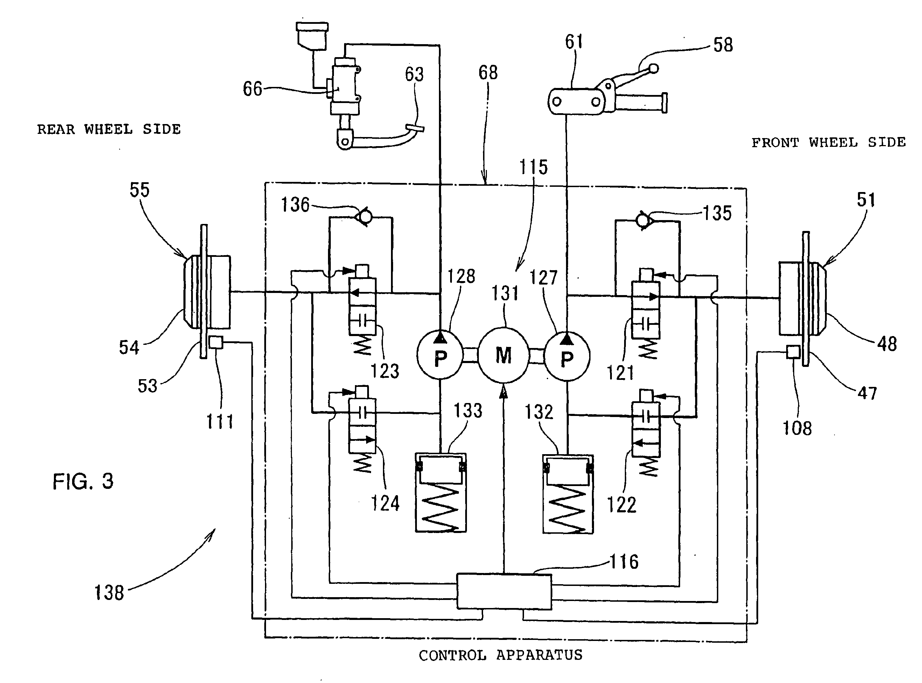

FIG. 3 is a detailed block diagram of the brake system for which the ABS according to the present invention is provided. The modulator 68 as a braking force adjustment apparatus of the present invention includes an ABS hydraulic pressure adjustment apparatus 115, and a control apparatus 116 as an antilock brake controlling apparatus for controlling the ABS hydraulic pressure adjustment apparatus 115.

The ABS hydraulic pressure adjustment apparatus 115 includes front wheel side solenoid valves 121, 122, rear wheel side solenoid valves 123, 124, pumps 127, 128 for generating brake hydraulic pressure for the ABS. The ABS hydraulic pressure adjustment apparatus 115 further includes a motor 131 for driving the pumps 127, 128, reservoirs 132, 133 for reserving the brake fluid, and check valves 135, 136 for supplying the brake fluid in one direction when a brake hydraulic pressure higher than a preset brake hydraulic pressure acts.

The front wheel solenoid valve 121 and the rear wheel solenoid valve 123 are valves which are kept open upon normal braking which is performed when the front wheel brake lever 58 and the rear wheel brake pedal 63 are operated without rendering the ABS operative.

The front wheel solenoid valve 122 and the rear wheel solenoid valve 124 are valves which are kept closed upon normal braking which is performed when the front wheel brake lever 58 and the rear wheel brake pedal 63 are operated without rendering the ABS operative.

The control apparatus 116 is an apparatus for controlling operation of the solenoid valves 121 to 124 and the motor 131.
The front wheel speed sensor 108 and the rear wheel speed sensor 111 are sensors, for example, of the electromagnetic induction type.

The modulator 68, front wheel speed sensor 108 and rear wheel speed sensor 111 cooperatively form the ABS 138.
The ABS 138 is an apparatus for preventing wheel locking which occurs upon braking upon sudden braking or braking on a slippery road surface.

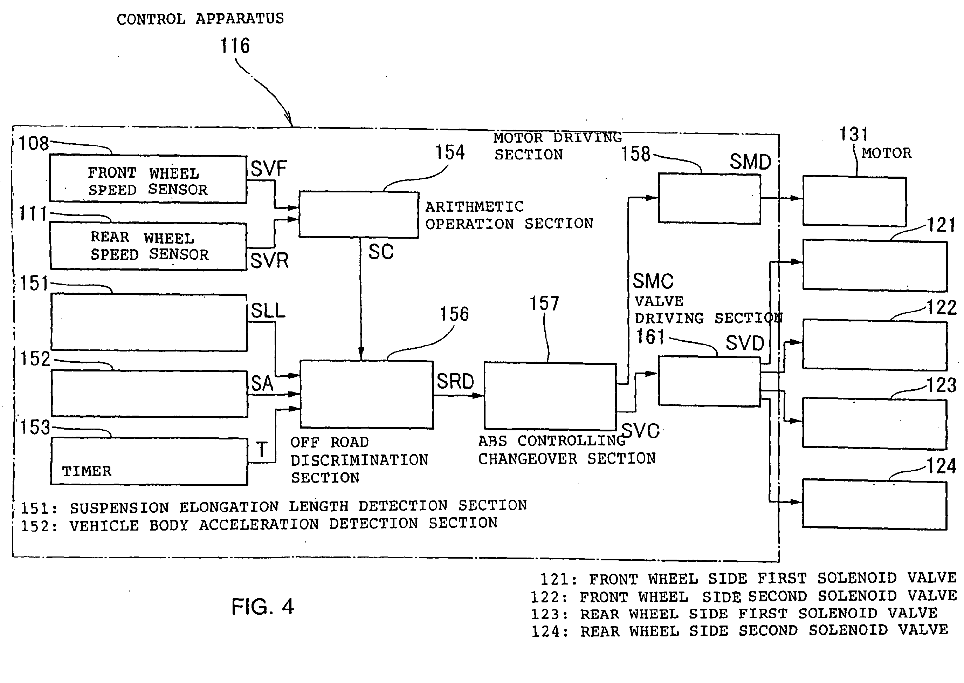

FIG. 4 is a block diagram of the control apparatus according to the present invention. (For reference characters, refer also to FIGS. 1 and 3.)
The control apparatus 116 includes the front wheel speed sensor 108 for detecting the wheel speed of the front wheel and outputting a front wheel speed signal SVF, and the rear wheel speed sensor 111 for detecting the wheel speed of the rear wheel and outputting a rear wheel speed signal SVR. The control apparatus 116 further includes a suspension elongation length detection section 151 for detecting the length of elongation when the front fork 13 as the front wheel suspension and/or a rear cushion unit (not shown) as a rear wheel suspension are elongated and outputting an elongation length signal SLL. The control apparatus 116 further includes a vehicle body acceleration detection section 152 such as an acceleration sensor for detecting upward and downward oscillations of the vehicle body and outputting an acceleration signal SA, and a timer 153 for outputting a time signal T. The control apparatus 116 further includes an arithmetic operation section 154 for calculating a front wheel acceleration (that is, a front wheel rotational acceleration) and a rear wheel acceleration (that is, a rear wheel rotational acceleration) based on the front wheel speed signal SVF from the front wheel speed sensor 108 and the rear wheel speed signal SVR from the rear wheel speed sensor 111 and outputting an arithmetic operation signal SC. The control apparatus 116 further includes an off road discrimination section 156 for discriminating whether or not the traveling road surface is an off road based on the elongation length signal SLL from the suspension elongation length detection section 151, the acceleration signal SA from the vehicle body acceleration detection section 152, the time signal T from the timer 153 and the arithmetic operation signal SC from the arithmetic operation section 154 and outputting an off road discrimination signal SRD. The control apparatus 116 further includes an antilock brake controlling method changeover section 157 (hereinafter referred to as ABS controlling method changeover section 157) for changing over the ABS controlling method between a normal traveling antilock control mode and an off road traveling antilock control mode based on the off road discrimination signal SRD from the off road discrimination section 156. The control apparatus 116 further includes a motor driving section 158 for outputting a motor driving signal SMD based on a motor control signal SMC from the ABS controlling method changeover section 157 to drive the motor 131. The control apparatus 116 further includes a valve driving section 161 for outputting a valve driving signal SVD based on a valve control signal SVC from the ABS controlling method changeover section 157 to drive the front wheel side solenoid valves 121, 122 (more particularly, the front wheel first solenoid valve 121 and the front wheel second solenoid valve 122) and the rear wheel side solenoid valves (more particularly, the rear wheel first solenoid valve 123 and the rear wheel second solenoid valve 124).

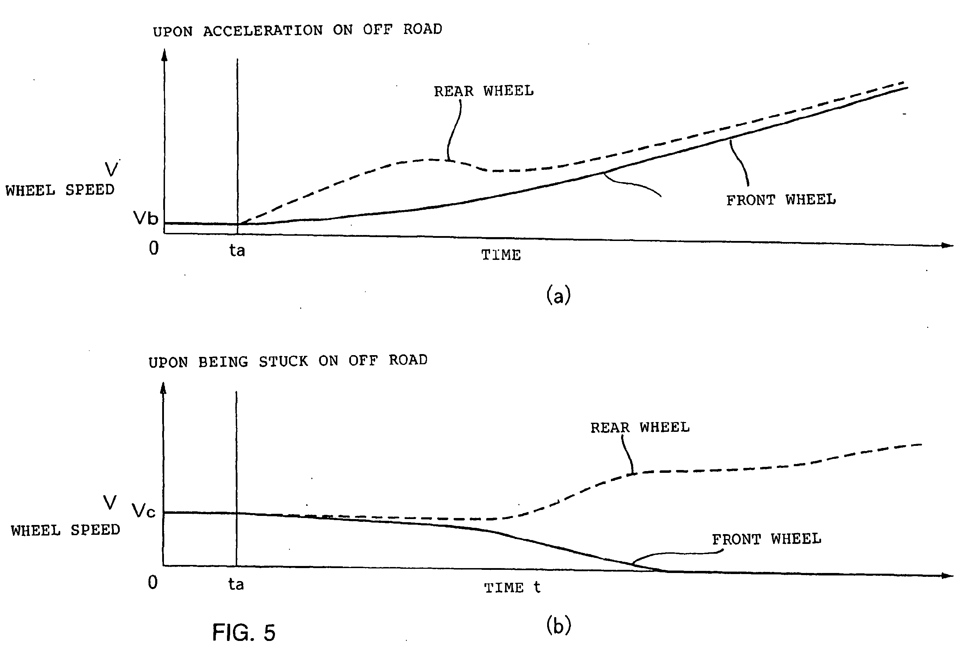

In the following, unique phenomena upon off road traveling of a motorcycle which make a premise of the antilock brake controlling method of the present invention are described.
First, acceleration and a stuck state on an off road are described.
(a) and (b) of FIG. 5 are graphs illustrating states upon acceleration and being stuck on an off road, and (a) illustrates a state upon acceleration of a motorcycle and (b) illustrates a state upon being stuck of the motorcycle. In both of (a) and (b), the axis of ordinate of the graph represents the wheel speed V of the front and rear wheels, and the axis of abscissa indicates the time t. Further, the wheel speed of the front wheel is indicated by a solid line while the wheel speed of the rear wheel indicated a broken line. (This similarly applies in the succeeding figures.)

Referring to (a), if a motorcycle starts acceleration when time t is ta during traveling wherein both of the wheel speed of the front wheel and the wheel speed of the rear wheel are Vb, then immediately after the acceleration is started, the wheel speed of the front wheel is almost equal to Vb, but the wheel speed of the rear wheel increases by a great amount since the rear wheel slips and rotates idly because the coefficient of friction of the road surface is low. If the wheel speed of the rear wheel increases to some degree, the increase of the wheel speed decreases. However, since the moving speed of the vehicle body (vehicle speed) gradually increases, the wheel speed of the front wheel also increases together with the increase of the moving speed.

Referring to (b), when the time t is ta during traveling of the motorcycle wherein both of the wheel speed of the front wheel and the wheel speed of the rear wheel are Vc, for example, the front wheel and the rear wheel advance into a muddy place and begin to enter a stuck state.
Immediately after the front and rear wheels are placed into a stuck state, the wheel speed of the front wheel decreases substantially linearly and soon becomes equal to zero while the wheel speed of the rear wheel gradually increases while the rear wheel slips.

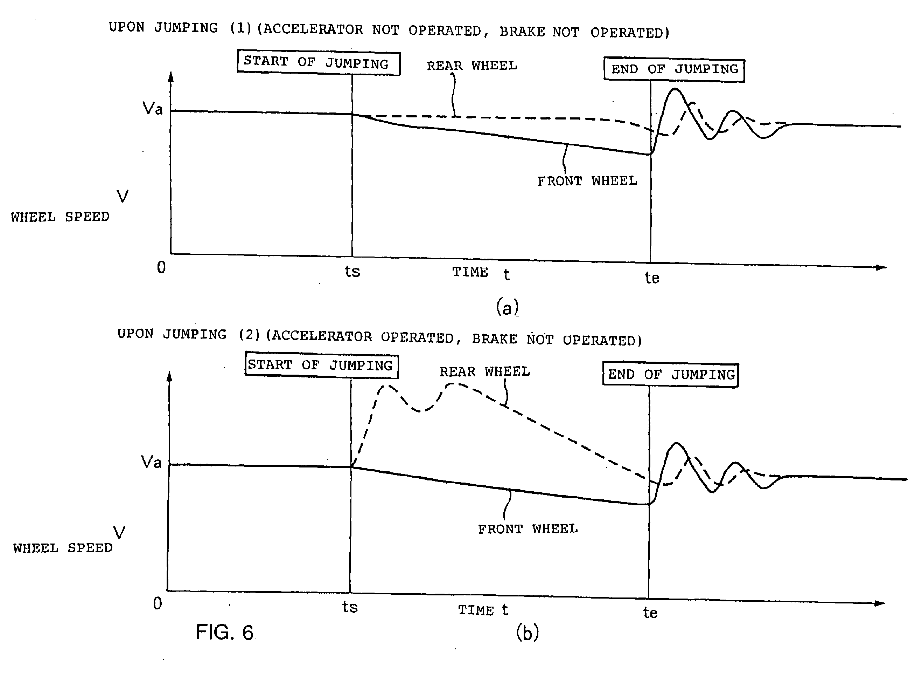

(a) and (b) of FIG. 6 are graphs illustrating states upon jumping on an off road, and (a) illustrates a state when the accelerator of the motorcycle is not operated and the brake is not operated either whereas (b) illustrates a state when the accelerator of the motorcycle is operated but the brake is not operated. In both of (a) and (b), the axis of ordinate of the graph indicates the wheel speed V and the axis of abscissa indicates the time t.
Referring to (a), if the motorcycle begins to jump when the time t is ts during traveling of the motorcycle while both of the wheel speed of the front wheel and the wheel speed of the rear wheel are Va, then the wheel speed of the front wheel decreases substantially linearly while the wheel speed of the rear wheel little varies. If the motorcycle lands and the jump comes to an end when the time t is te, then the wheel speeds of both of the front and rear wheels increase and decrease immediately after the end of the jump, and then the wheel speeds converge soon.

Referring to (b), if the motorcycle begins to jump when the time t is ts during traveling of the motorcycle while both of the wheel speed of the front wheel and the wheel speed of the rear wheel are Va and the accelerator is operated, then the wheel speed of the front wheel decreases substantially linearly. However, the wheel speed of the rear wheel which is a driving wheel increases suddenly since the resistance between the rear wheel and the road surface disappears and the rear wheel slips, and thereafter, the wheel speed of the rear wheel decreases gradually. If the motorcycle lands and the jump comes to an end when the time t is te, then the wheel speeds of both of the front and rear wheels increase and decrease immediately after the end of the jump, and then the wheel speeds converge soon.

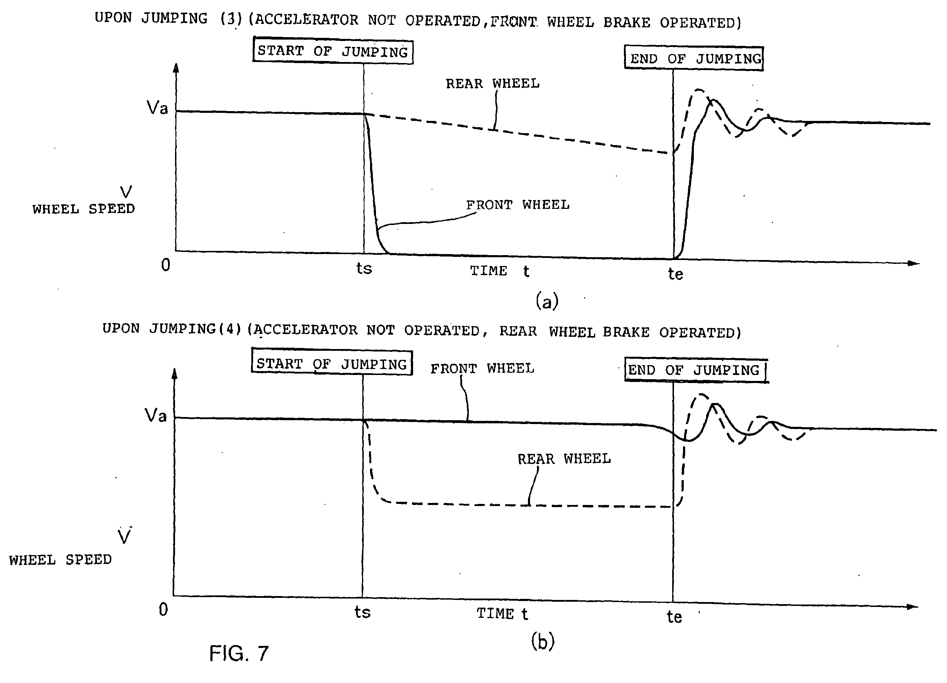

(a) and (b) of FIG. 7 are different graphs illustrating states upon jumping on an off road, and (a) illustrates a state when the accelerator of the motorcycle is not operated but the front wheel brake is operated whereas (b) illustrates a state when the accelerator of the motorcycle is not operated but the rear wheel brake is operated. In both of (a) and (b), the axis of ordinate of the graph indicates the wheel speed V and the axis of abscissa indicates the time t.
Referring to (a), if the motorcycle begins to jump when the time t is ts during traveling of the motorcycle while both of the wheel speed of the front wheel and the wheel speed of the rear wheel are Va and then the front wheel brake is operated, then the wheel speed of the front wheel decreases suddenly. Meanwhile, the wheel speed of the rear wheel gradually decreases substantially linearly. If the motorcycle lands and the jump comes to an end when the time t is te, then the wheel speeds of both of the front and rear wheels increase and decrease immediately after the end of the jump, and then the wheel speeds converge soon.

Referring to (b), if the motorcycle begins to jump when the time t is ts during traveling of the motorcycle while both of the wheel speed of the front wheel and the wheel speed of the rear wheel are Va and the rear wheel brake is operated, then the wheel speed of the front wheel little varies and substantially maintains the wheel speed Va. However, the wheel speed of the rear wheel decreases suddenly to a certain wheel speed. If the motorcycle lands and the jump comes to an end when the time t is te, then the wheel speeds of both of the front and rear wheels increase and decrease immediately after the end of the jump, and then the wheel speeds converge soon.

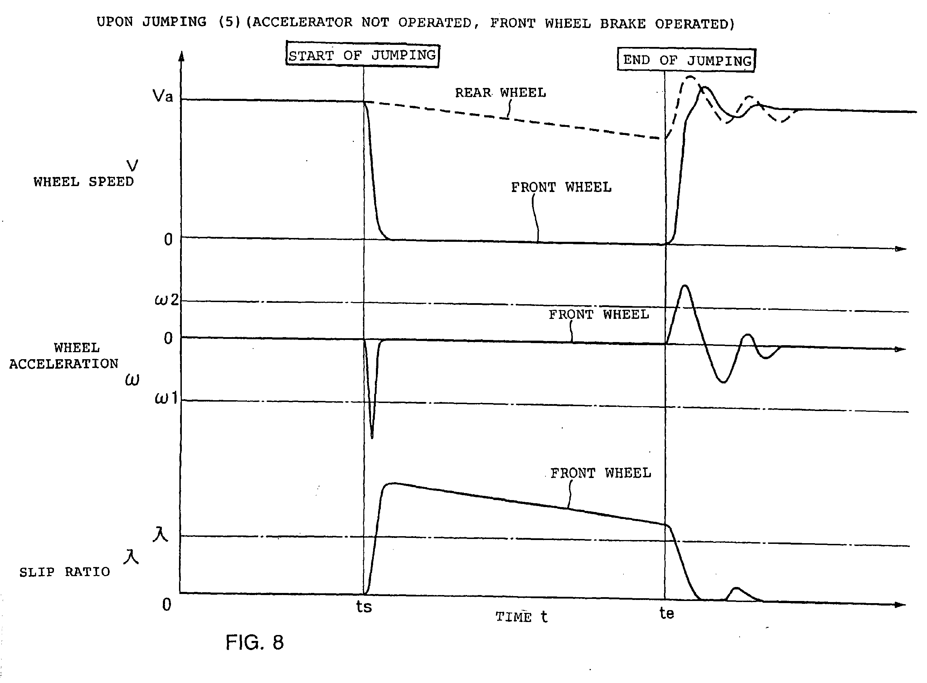

FIG. 8 is a graph particularly illustrating a state upon jumping on an off road, and again illustrates a relationship between the wheel speed and the time in the state illustrated in (a) of FIG. 7 (state when, upon jumping, the accelerator is not operated but the front wheel brake is operated). FIG. 8 illustrates also a wheel acceleration of the front wheel and a slip ratio λ of the front wheel. The axis of ordinate indicates the wheel speed V, the wheel acceleration ω of the front wheel and the slip ratio of the front wheel, and the axis of abscissa indicates the time t. It is to be noted that the slip ratio λ is determined by slip ratio λ = (vehicle body speed - wheel speed)/vehicle body speed x 100 %. If the wheel speed becomes lower with respect to the vehicle body speed, then the slip ratio λ become high.

If the wheel speed V varies as illustrated in FIG. 8, then the wheel acceleration ω decreases instantaneously and becomes lower than a negative predetermined value ω1 immediately after the time t comes to ts. Further, the wheel acceleration ω increases and decreases immediately after the time t comes to te, and converges soon. At this time, the wheel acceleration ω is higher than a positive predetermined value ω2.
Meanwhile, the slip ratio λ increases suddenly immediately after the time t comes to ts. Then, after the slip ratio λ reaches a certain value, it decreases gradually, and immediately after the time t comes to te, the slip ratio λ decreases and comes to zero soon.

Now, a flow of the antilock brake controlling method of the present invention is described.

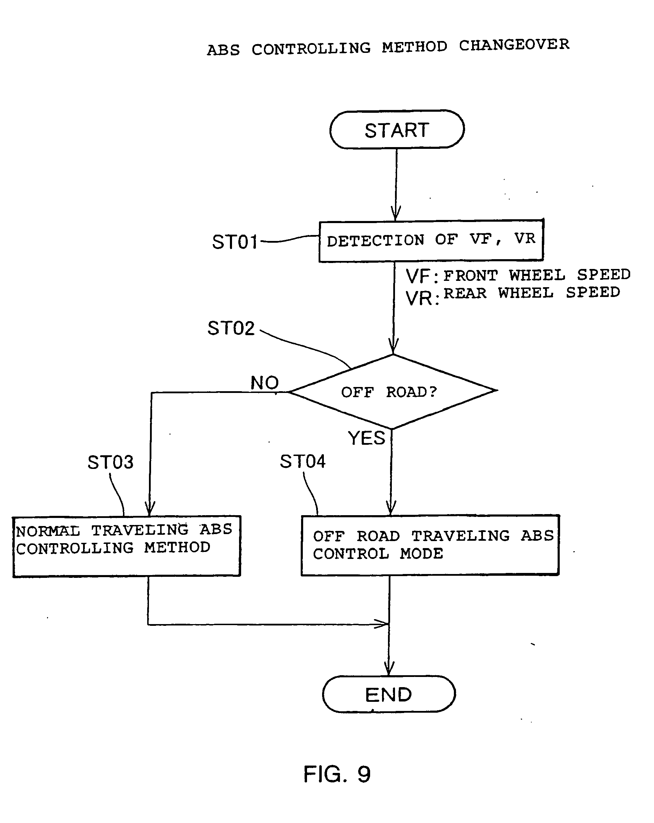

FIG. 9 is a flow chart illustrating a first embodiment of the antilock brake controlling method according to the present invention, and the flow chart is represented as antilock brake controlling method changeover (hereinafter referred to as "ABS controlling method changeover": this ABS controlling method changeover is the substance described in claim 1). It is to be noted that STXX represents a step number. (This similarly applies in the following description.)
ST01 ... The front wheel speed (that is, front wheel rotational speed) VF is detected by means of the front wheel speed sensor, and the rear wheel speed (that is, rear wheel rotational speed) VR is detected by means of the rear wheel speed sensor.

ST02 ... It is discriminated by the off road discrimination section whether or not the road surface is an off road.
If the road surface is not an off road (NO), then the processing advances to step ST03.
If the road surface is an off road (YES), then the processing advances to step ST04.
ST03 ... The antilock brake control is changed over to the normal traveling antilock control mode (hereinafter referred to as "normal traveling ABS control mode") by the ABS controlling method changeover section.
ST04 ... The antilock brake control is changed over to the off road traveling antilock control mode (hereinafter referred to as "off road traveling ABS control mode") by the ABS controlling method changeover section.

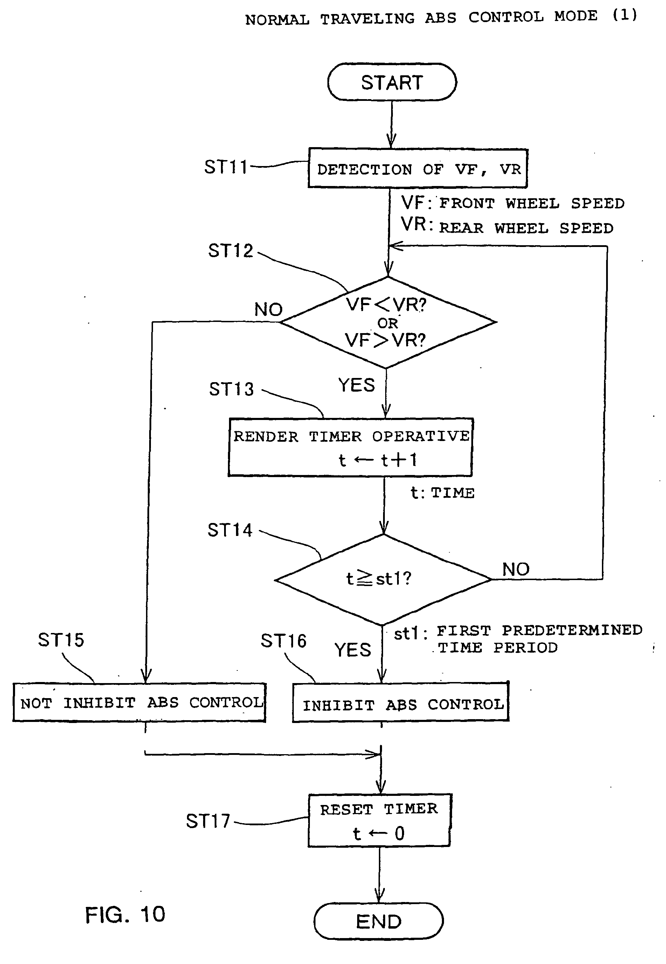

FIG. 10 is a flow chart illustrating a second embodiment of the antilock brake controlling method according to the present invention, and illustrates a normal traveling ABS control mode (1) (that is, a normal traveling antilock control mode M1) .
ST11 ... The front wheel speed VF is detected by means of the front wheel speed sensor, and the rear wheel speed VR is detected by means of the rear wheel speed sensor.

ST12 ... It is discriminated whether the front wheel speed VF is lower than the rear wheel speed VR or the front wheel speed VF is higher than the rear wheel speed VR.
If it is not discriminated that VF < VR or VF > VR (NO), then the processing advances to step ST15.
If it is discriminated that VF < VR or VF > VR (YES), then the processing advances to step ST13.
ST13 ... The timer is rendered operative (time t ← time t+1).

ST14 ... It is discriminated whether the time t is longer than or equal to first predetermined time period st1.
If it is not discriminated that t ≧ st1 (NO), then the processing returns to step ST12.
If it is discriminated that t ≧ st1 (YES), then the processing advances to step ST16.
ST15 ... The ABS control is not inhibited.
ST16 ... The ABS control is inhibited.
ST17 ... The timer is reset (time t ← 0 (zero)).

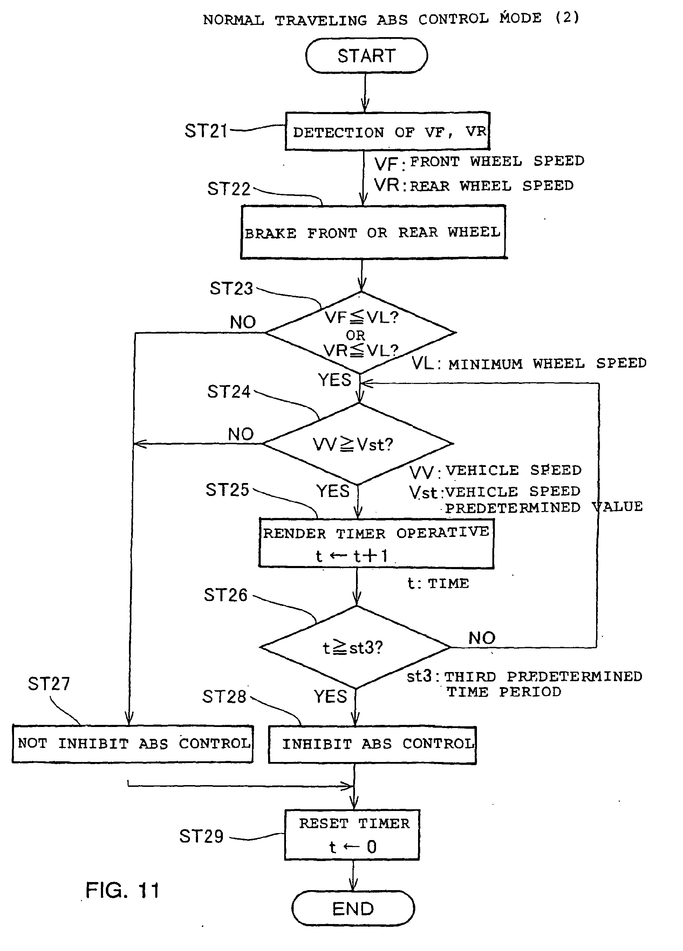

FIG. 11 is a flow chart illustrating a third embodiment of the antilock brake controlling method according to the present invention, and illustrates a normal traveling ABS control mode (2) (that is, a normal traveling antilock control mode M2).
ST21 ... The front wheel speed VF is detected by means of the front wheel speed sensor, and the rear wheel speed VR is detected by means of the rear wheel speed sensor.
ST22 ... The front wheel or the rear wheel is braked.

ST23 ... It is discriminated whether the front wheel speed VF is lower than or equal to minimum wheel speed VL (that is, a minimum wheel rotational speed) or the rear wheel speed VR is lower than or equal to the minimum wheel speed VL.
If it is not discriminated that VF ≦ VL or VR ≦ VL (NO), then the processing advances to step ST27.
If it is discriminated that VF ≦ VL or VR ≦ VL (YES), then the processing advances to step ST24.

ST24 ... It is discriminated whether the vehicle speed (that is, vehicle body speed) VV is higher than or equal to a vehicle speed predetermined value Vst.
If it is not discriminated that W ≧ Vst (NO), then the processing advances to step ST27.
If it is discriminated that VV ≧ Vst (YES), then the processing advances to step ST25.
ST25 ... The timer is rendered operative (time t ← time t+1).

ST26 ... It is discriminated whether the time t is longer than or equal to a third predetermined time period st3.
If it is not discriminated that t ≧ st3 (NO), then the processing returns to step ST24.
If it is discriminated that t ≧ st3 (YES), then the processing advances to step ST28.
ST27 ... The ABS control is not inhibited.
ST28 ... The ABS control is inhibited.
ST29 ... The timer is reset (time t ← 0 (zero)).

The normal traveling antilock control mode M1 and the normal traveling antilock control mode M2 described above cooperatively form a normal traveling antilock control mode M3.

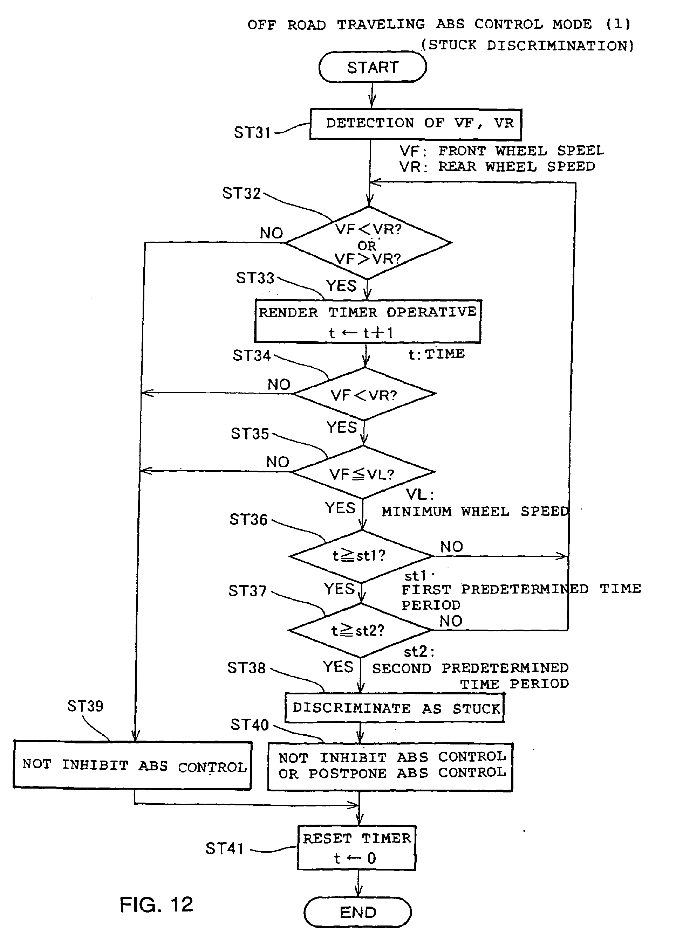

FIG. 12 is a flow chart illustrating a fourth embodiment of the antilock brake controlling method according to the present invention, and illustrates an off road traveling ABS control mode (1) (stuck discrimination) (that is, a off road traveling antilock control mode N1).
ST31 ... The front wheel speed VF is detected by means of the front wheel speed sensor, and the rear wheel speed VR is detected by means of the rear wheel speed sensor.

ST32 ... It is discriminated whether the front wheel speed VF is lower than the rear wheel speed VR or the front wheel speed VF is higher than the rear wheel speed VR.
If it is not discriminated that VF < VR or VF > VR (NO), then the processing advances to step ST39.
If it is discriminated that VF < VR or VF > VR (YES), then the processing advances to step ST33.
ST33 ... The timer is rendered operative (time t ← time t+1).

ST34 ... It is discriminated whether the front wheel speed VF is lower than the rear wheel speed VR.
If it is not discriminated that VF < VR (NO), then the processing advances to step ST39.

If it is discriminated that VF < VR (YES), then the processing advances to step ST35.

ST35 ... It is discriminated whether the front wheel speed VF is lower than or equal to the minimum wheel speed VL.
If it is not discriminated that VF ≦ VL (NO), then the processing advances to step ST39.
If it is discriminated that VF ≦ VL (YES), then the processing advances to step ST36.

ST36 ... It is discriminated whether the time t is longer than or equal to first predetermined time period st1.
If it is not discriminated that t ≧ st1 (NO), then the processing returns to step ST32.
If it is discriminated that t ≧ st1 (YES), then the processing advances to step ST37.

ST37 ... It is discriminated whether the time t is longer than or equal to a second predetermined time period st2.
If it is not discriminated that t ≧ st2 (NO), then the processing returns to step ST32.

If it is discriminated that t ≧ st2 (YES), then the processing advances to step ST38.
ST38 ... It is determined that the motorcycle is placed in a stuck state.

ST39 ... The ABS control is not inhibited.
ST40 ... The ABS control is not inhibited or the ABS control is postponed.
ST41 ... The timer is reset (time t ← 0 (zero)).

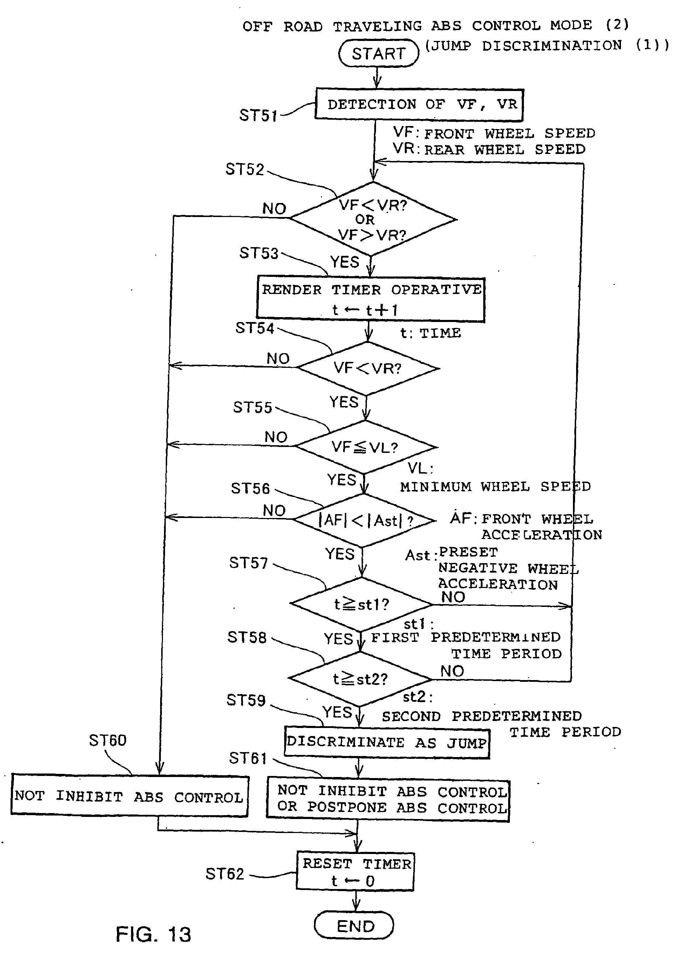

FIG. 13 is a flow chart illustrating a fifth embodiment of the antilock brake controlling method according to the present invention, and illustrates an off road traveling ABS control mode (2) (jump discrimination (1)) (that is, a off road traveling antilock control mode N2).
ST51 ... The front wheel speed VF is detected by means of the front wheel speed sensor, and the rear wheel speed VR is detected by means of the rear wheel speed sensor.

ST52 ... It is discriminated whether the front wheel speed VF is lower than the rear wheel speed VR or the front wheel speed VF is higher than the rear wheel speed VR.
If it is not discriminated that VF < VR or VF > VR (NO), then the processing advances to step ST60.
If it is discriminated that VF < VR or VF > VR (YES), then the processing advances to step ST53.
ST53 ... The timer is rendered operative (time t ← time t+1).

ST54 ... It is discriminated whether the front wheel speed VF is lower than the rear wheel speed VR.
If it is not discriminated that VF < VR (NO), then the processing advances to step ST60.
If it is discriminated that VF < VR (YES), then the processing advances to step ST55.

ST55 ... It is discriminated whether the front wheel speed VF is lower than or equal to the minimum wheel speed VL.
If it is not discriminated that VF ≦ VL (NO), then the processing advances to step ST60.
If it is discriminated that VF ≦ VL (YES), then the processing advances to step ST56.

ST56 ... It is discriminated whether the absolute value of the front wheel acceleration AF (that is, front wheel rotational acceleration) is lower than the absolute value of a negative wheel acceleration set in advance.
If it is not discriminated that |AF| < |Ast| (NO), then the processing advances to step ST60.
If it is discriminated that |AF| < |Ast| (YES), then the processing advances to step ST57.
ST57 ... It is discriminated whether the time t is longer than or equal to the first predetermined time period st1.
If it is not discriminated that t ≧ st1 (NO), then the processing returns to step ST52.
If it is discriminated that t ≧ st1 (YES), then the processing advances to step ST58.

ST58 ... It is discriminated whether the time t is longer than or equal to the second predetermined time period st2.
If it is not discriminated that t ≧ st2 (NO), then the processing returns to step ST52.
If it is discriminated that t ≧ st2 (YES), then the processing advances to step ST59.
ST59 ... It is determined that the motorcycle jumps.
ST60 ... The ABS control is not inhibited.
ST61 ... The ABS control is not inhibited or the ABS control is postponed.
ST62 ... The timer is reset (time t ← 0 (zero)).

The off road traveling antilock control mode N1 and the off road traveling antilock control mode N2 described above cooperatively form an off road traveling antilock control mode N3.

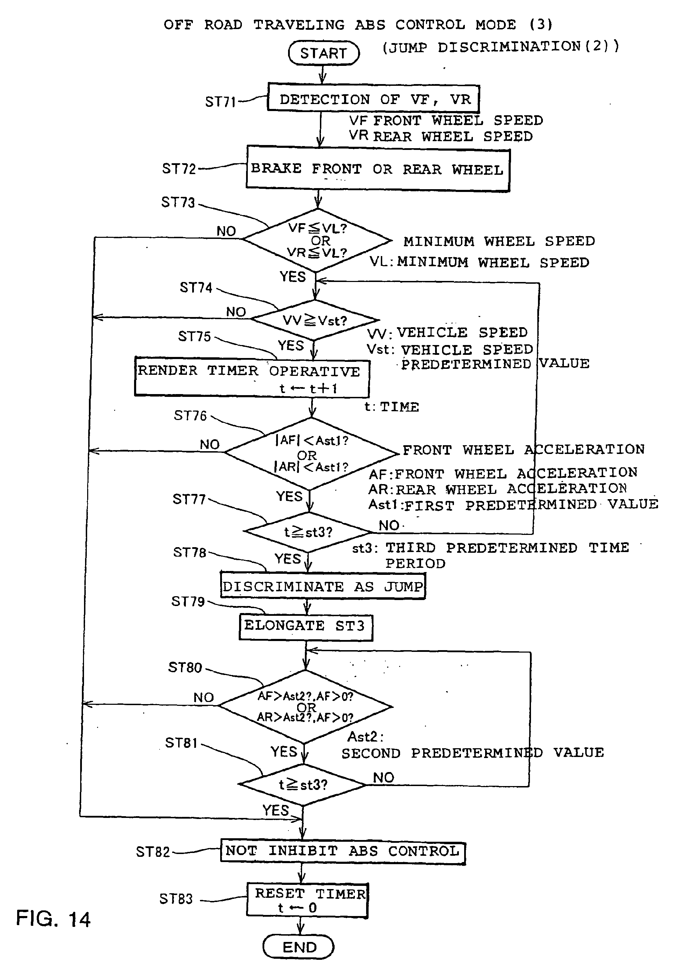

FIG. 14 is a flow chart illustrating a sixth embodiment of the antilock brake controlling method according to the present invention, and illustrates an off road traveling ABS control mode (3) (jump discrimination (2)) (that is, a off road traveling antilock control mode N4).

ST71 ... The front wheel speed VF is detected by means of the front wheel speed sensor, and the rear wheel speed VR is detected by means of the rear wheel speed sensor.
ST72 ... The front wheel or the rear wheel is braked.

ST73 ... It is discriminated whether the front wheel speed VF is lower than or equal to the minimum wheel speed VL or the rear wheel speed VR is lower than or equal to the minimum wheel speed VL.
If it is not discriminated that VF ≦ VL or VR ≦ VL (NO), then the processing advances to step ST82.
If it is discriminated that VF ≦ VL or VR ≦ VL (YES), then the processing advances to step ST74.

ST74 ... It is discriminated whether the vehicle speed VV is higher than or equal to the vehicle speed predetermined value Vst.
If it is not discriminated that VV ≧ Vst (NO), then the processing advances to step ST82.
If it is discriminated that VV ≧ Vst (YES), then the processing advances to step ST75.
ST75 ... The timer is rendered operative (time t ← time t+1)

ST76 ... It is discriminated whether the absolute value of the front wheel acceleration AF is lower than a first predetermined value Ast1 or the absolute value of the rear wheel acceleration AR is lower than the first predetermined value Ast1.
If it is not discriminated that |AF| < Ast1 or |AR| < Ast1 (NO), then the processing advances to step ST82.

If it is discriminated that |AF| < Ast1 or |AR| < Ast1 (YES), then the processing advances to step ST77.

ST77 ... It is discriminated whether the time t is longer than or equal to the third predetermined time period st3.
If it is not discriminated that t ≧ st3 (NO), then the processing returns to step ST74.
If it is discriminated that t ≧ st3 (YES), then the processing advances to step ST78.
ST78 ... It is determined that the motorcycle jumps.
ST79 ... The third predetermined time period st3 is elongated.

ST80 ... It is discriminated whether the front wheel acceleration AF is higher than a second predetermined value Ast2 and besides is positive or the absolute value of the rear wheel acceleration AR is higher than the second predetermined value Ast2 and besides is positive.
If it is not discriminated that AF > Ast2 and AF > 0 (zero) or AR > Ast2 and AR > 0 (zero) (NO), then the processing advances to step ST82.
If it is discriminated that AF > Ast2 and AF > 0 (zero) or AR > Ast2 and AR > 0 (zero) (YES), then the processing advances to step ST81.

ST81 ... It is discriminated whether the time t is longer than or equal to the third predetermined time period st3.
If it is not discriminated that t ≧ st3 (NO), then the processing returns to step ST80.
If it is discriminated that t ≧ st3 (YES), then the processing advances to step ST82.
ST82 ... The ABS control is not inhibited.
ST83 ... The timer is reset (time t ← 0 (zero)).

The off road traveling antilock control mode N1 and the off road traveling antilock control mode N4 described above cooperatively form an off road traveling antilock control mode N5.

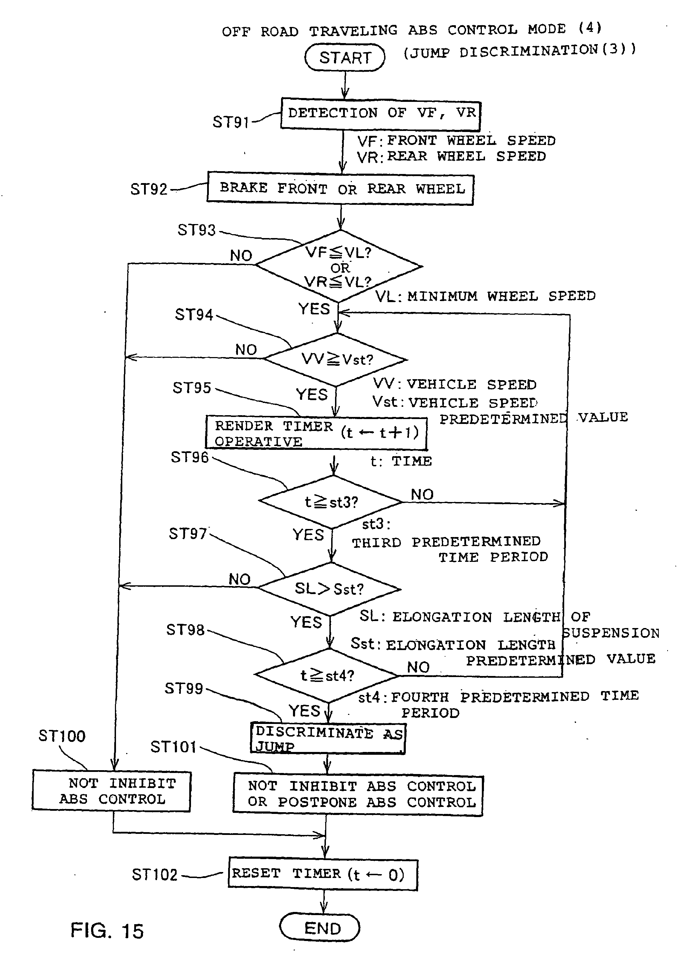

FIG. 15 is a flow chart illustrating a seventh embodiment of the antilock brake controlling method according to the present invention, and illustrates an off road traveling ABS control mode (4) (jump discrimination (3)) (that is, a off road traveling antilock control mode N6).
ST91 ... The front wheel speed VF is detected by means of the front wheel speed sensor, and the rear wheel speed VR is detected by means of the rear wheel speed sensor.
ST92 ... The front wheel or the rear wheel is braked.

ST93 ... It is discriminated whether the front wheel speed VF is lower than or equal to the minimum wheel speed VL or the rear wheel speed VR is lower than or equal to the minimum wheel speed VL.
If it is not discriminated that VF ≦ VL or VR ≦ VL (NO), then the processing advances to step ST100.
If it is discriminated that VF ≦ VL or VR ≦ VL (YES), then the processing advances to step ST94.

ST94 ... It is discriminated whether the vehicle speed W is higher than or equal to the vehicle speed predetermined value Vst.
If it is not discriminated that VV ≧ Vst (NO), then the processing advances to step ST100.
If it is discriminated that VV ≧ Vst (YES), then the processing advances to step ST95.
ST95 ... The timer is rendered operative (time t ← time t+1)

ST96 ... It is discriminated whether the time t is longer than or equal to the third predetermined time period st3.
If it is not discriminated that t ≧ st3 (NO), then the processing returns to step ST94.
If it is discriminated that t ≧ st3 (YES), then the processing advances to step ST97.

ST97 ... It is discriminated whether the elongation length SL of the suspension detected by the suspension elongation length detection section is greater than an elongation length predetermined value Sst.
If it is not discriminated that SL > Sst (NO), then the processing advances to step ST100.
If it is discriminated that SL > Sst (YES), then the processing advances to step ST98.

ST98 ... It is discriminated whether the time t is longer than or equal to a fourth predetermined time period st4.
If it is not discriminated that t ≧ st4 (NO), then the processing returns to step ST94.
If it is discriminated that t ≧ st4 (YES), then the processing advances to step ST99.

ST99 ... It is determined that the motorcycle jumps.

ST100 ... The ABS control is not inhibited.
ST101 ... The ABS control is not inhibited or the ABS control is postponed.
ST102 ... The timer is reset (time t ← 0 (zero)).

The off road traveling antilock control mode N1 and the off road traveling antilock control mode N6 described above cooperatively form an off road traveling antilock control mode N7.

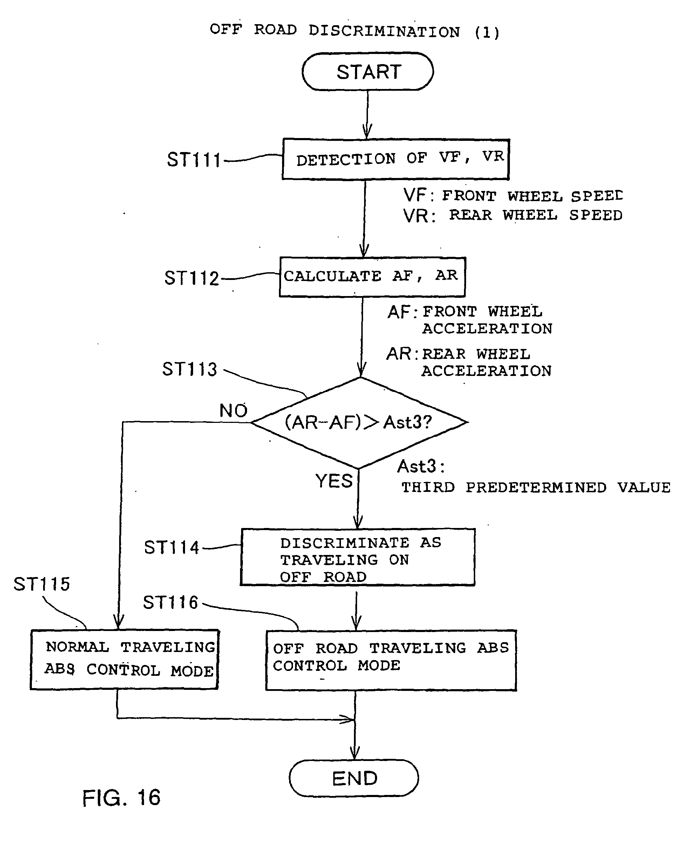

FIG. 16 is a flow chart illustrating an eighth embodiment of the antilock brake controlling method according to the present invention, and illustrates an off road discrimination (1).
ST111 ... The front wheel speed VF is detected by means of the front wheel speed sensor, and the rear wheel speed VR is detected by means of the rear wheel speed sensor.
ST112 ... The front wheel acceleration AF and the rear wheel acceleration AR are calculated.

ST113 ... It is discriminated whether the difference between the rear wheel acceleration AR and the front wheel acceleration AF is greater than a third predetermined value Ast3.
If it is not discriminated that (AR - AF) > Ast3 (NO), then the processing advances to step ST115.
If it is discriminated that (AR - AF) > Ast3 (YES), then the processing advances to step ST114.

ST114 ... It is determined that the motorcycle is traveling on an off road.
ST115 ... The antilock brake control is changed over to the normal traveling ABS control mode by the ABS controlling method changeover section.
ST116 ... The control mode is changed over to the off road traveling ABS control mode by the ABS controlling method changeover section.

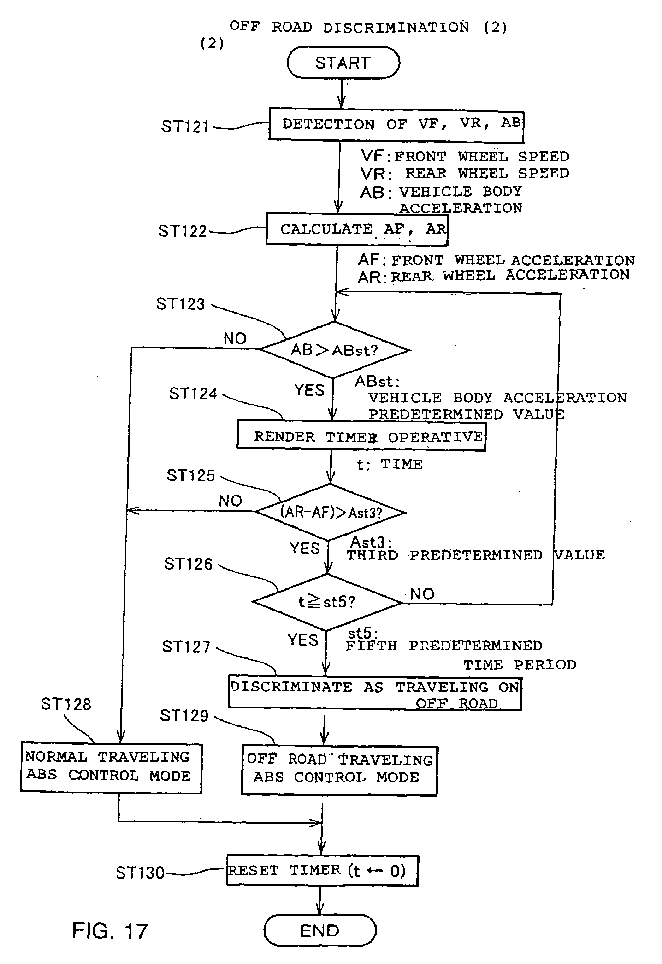

FIG. 17 is a flow chart illustrating a ninth embodiment of the antilock brake controlling method according to the present invention, and illustrates an off road discrimination (2).
ST121 ... The front wheel speed VF is detected by means of the front wheel speed sensor, the rear wheel speed VR is detected by means of the rear wheel speed sensor, and the vehicle body acceleration AB is detected by means of the vehicle body acceleration detection section.
ST122 ... The front wheel acceleration AF and the rear wheel acceleration AR are calculated.

ST123 ... It is discriminated whether the vehicle body acceleration AB is higher than a vehicle body acceleration predetermined value ABst.
If it is not discriminated that AB > ABst (NO), then the processing advances to step ST128.
If it is discriminated that AB > ABst (YES), then the processing advances to step ST124.
ST124 ... The timer is rendered operative (time t ← time t+1).
ST125 ... It is discriminated whether the difference between the rear wheel acceleration AR and the front wheel acceleration AF is greater than the third predetermined value Ast3.
If it is not discriminated that (AR - AF) > Ast3 (NO), then the processing advances to step ST128.
If it is discriminated that (AR - AF) > Ast3 (YES), then the processing advances to step ST126.

ST126 ... It is discriminated whether the time t is longer than or equal to a fifth predetermined time period st5.
If it is not discriminated that t ≧ st5 (NO), then the processing returns to step ST123.
If it is discriminated that t ≧ st5 (YES), then the processing advances to step ST127.
ST127 ... It is determined that the motorcycle is traveling on an off road.

ST128 ... The control mode is changed over to the normal traveling ABS control mode by the ABS controlling method changeover section.
ST129 ... The control mode is changed over to the off road traveling ABS control mode by the ABS controlling method changeover section.
ST130 ... The timer is reset (time t ← 0 (zero)).

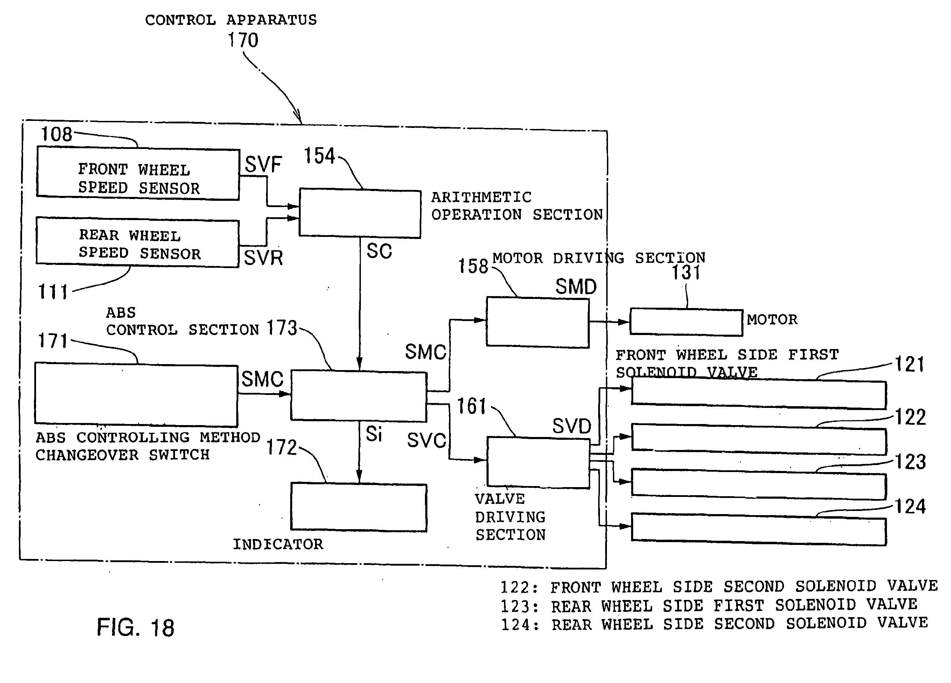

FIG. 18 is a block diagram of another embodiment of the control apparatus according to the present invention. (For reference characters, refer also to FIGS. 1 and 3.) It is to be noted that like elements to those of the embodiment shown in FIG. 4 are denoted by like reference characters and detailed description thereof is omitted.

The control apparatus 170 includes a front wheel speed sensor 108, a rear wheel speed sensor 111, and an ABS controlling method changeover switch 171 for outputting a mode changeover signal SMC in order to manually change over the antilock brake control between the normal traveling ABS control mode and the off road traveling ABS control mode. The control apparatus 170 further includes an arithmetic operation section 154, and an ABS control section 173 for outputting an indicator signal Si corresponding to the mode to an indicator 172 based on the mode changeover signal SMC from the ABS controlling method changeover switch 171 and outputting a motor control signal SMC and a valve control signal SVC. The control apparatus 170 further includes a motor driving section 158 for outputting a motor driving signal SMD based on the motor control signal SMC from the ABS control section 173 to drive the motor 131. The control apparatus 170 further includes a valve driving section 161 for outputting valve driving signals SVD based on the valve control signal SVC from the ABS control section 173 to drive a front wheel first solenoid valve 121, a front wheel second solenoid valve 122, a rear wheel first solenoid valve 123 and a rear wheel second solenoid valve 124.

The antilock brake controlling method of the present invention is suitable for an ABS for two- and three-wheeled cars.

It is a subject of the present invention to prevent, in an antilock brake controlling method, inhibition of antilock brake control or issuance of a fault warning by a diagnosis as a fault during off road traveling and further simplify the antilock brake control during normal traveling.

It is discriminated by an off road discrimination section whether or not the situation of the road surface is an off road, and based on the discrimination, antilock brake control is changed over by an antilock control method changeover section between a normal traveling antilock brake control mode for traveling on a road surface having a high coefficient of friction such as a pavement and an off road traveling antilock control mode for traveling on a road surface having comparatively great roughness and having a low coefficient of friction such as a gravel road.

### Description of Reference Characters

10 ... vehicle (motorcycle), 13 ... suspension (front fork), 14 ... driven wheel (front wheel), 22 ... driving wheel (rear wheel), 108 ... front wheel speed sensor, 111 ... rear wheel speed sensor, 116 ... antilock brake controlling apparatus (control apparatus), 151 ... suspension elongation length detection section, 152 ... vehicle body acceleration detection section, 156 ... off road discrimination section, 157 ... antilock controlling method changeover section, 171 ... antilock controlling method changeover switch, AB ... vehicle body acceleration, ABst ... vehicle body acceleration predetermined value, AF, AR ... wheel rotational acceleration (front wheel acceleration, rear wheel acceleration), Ast1 ... first predetermined value, Ast2 ... second predetermined value, Ast3 ... third predetermined value, Ast ... preset negative wheel rotational acceleration, SL ... elongation length of suspension, Sst ... elongation length predetermined value, st1 ... first predetermined time period, st2 ... second predetermined time period, st3 ... third predetermined time period, st4 ... fourth predetermined time period, st5 ... fifth predetermined time period, t ... time, VF, VR ... wheel rotational speed (front wheel speed, rear wheel speed), VL ... minimum wheel rotational speed (minimum wheel speed), Vst ... vehicle speed predetermined value, VV ... vehicle

## Claims

1. An antilock brake controlling method for performing antilock brake control of a vehicle (10), which includes a plurality of wheels (14, 22), a brake apparatus (48, 54) provided for each of at least one driving wheel (22) and one driven wheel (14) from among said wheels, and an antilock brake control apparatus (116) provided for the brake apparatus, in response to a situation of a road surface on which said vehicle travels based on rotational speeds of the wheels detected by wheel speed sensors (108, 111) for the wheels individually provided in the antilock brake control apparatus (116),
wherein it is discriminated by an off road discrimination section (156) whether or not the situation of the road surface is an off road, and based on the discrimination, the antilock brake control is changed over by an antilock control method changeover section (157; 171) between a normal traveling antilock brake control mode for traveling on a road surface having a high coefficient of friction such as pavement and an off road traveling antilock control mode for traveling on a road surface having comparatively great roughness and having a low coefficient of friction such as a gravel road,
**characterized in that**,
in the normal traveling antilock control mode, the rotational speed of a wheel A and the rotational speed of another wheel B are detected, and the antilock brake control is inhibited where the rotational speed of the wheel A is lower than the rotational speed of the wheel B or the period of time within which the rotational speed of the wheel A is higher than the rotational speed of the wheel B exceeds a first predetermined time period (st1), but
in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period (st1), only if the wheel whose rotational speed is lower is the driven wheel (14) and the acceleration of rotation of the wheel (AF, AR) is lower than an absolute value of a preset negative wheel rotational acceleration (Ast) for a second predetermined time period (st2), it is determined that said vehicle (10) is jumping and the antilock brake control is not inhibited or inhibition starting time at which the antilock brake control is to be inhibited is postponed.

2. The antilock brake controlling method according to claim 1,
**characterized in that**,
in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period (st1), only if the wheel whose rotational speed is lower is the driven wheel (14) and the rotational speed of the wheel is lower than a preset minimum wheel rotational speed (VL) for a second predetermined time period (st2), it is determined that said vehicle is stuck and the antilock brake control is not inhibited or inhibition starting time at which the antilock brake control is to be inhibited is postponed.

3. An antilock brake controlling method for performing antilock brake control of a vehicle (10), which includes a plurality of wheels (14, 22), a brake apparatus (48, 54) provided for each of at least one driving wheel (22) and one driven wheel (14) from among said wheels, and an antilock brake control apparatus (116) provided for the brake apparatus, in response to a situation of a road surface on which said vehicle travels based on rotational speeds of the wheels detected by wheel speed sensors (108, 111) for the wheels individually provided in the antilock brake control apparatus (116),
wherein it is discriminated by an off road discrimination section (156) whether or not the situation of the road surface is an off road, and based on the discrimination, the antilock brake control is changed over by an antilock control method changeover section (157; 171) between a normal traveling antilock brake control mode for traveling on a road surface having a high coefficient of friction such as pavement and an off road traveling antilock control mode for traveling on a road surface having comparatively great roughness and having a low coefficient of friction such as a gravel road,
**characterized in that**,
in the normal traveling antilock control mode, the rotational speed of a wheel A and the rotational speed of another wheel B are detected, and the antilock brake control is inhibited where the rotational speed of the wheel A is lower than the rotational speed of the wheel B or the period of time within which the rotational speed of the wheel A is higher than the rotational speed of the wheel B exceeds a first predetermined time period (st1) and where, when any of said wheels is braked, the vehicle speed (VV) exceeds a predetermined value (Vst) for a third predetermined time period (st3) after the rotational speed of the wheel is slowed down to become lower than a preset minimum wheel rotational speed (VL), but
in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period (st1), only if the wheel whose rotational speed is lower is the driven wheel (14) and the rotational speed of the last-mentioned wheel (14) is lower than a preset minimum wheel rotational speed (VL) for a second predetermined time period (st2), it is determined that said vehicle (10) is stuck and the antilock brake control is not inhibited or inhibition starting time at which the antilock brake control is to be inhibited is postponed, and
when any of said wheels is braked, even if the vehicle speed (VV) exceeds the predetermined value (Vst) for the third predetermined time period (st3) after the rotational speed of the wheel is slowed down to become lower than the preset minimum wheel rotational speed (VL), if an absolute value of a negative wheel rotational acceleration (AF, AR) when the rotational speed of the wheel is slowed down to become lower than the minimum wheel rotational speed (VL) is lower than a first predetermined value A (st1), then it is determined that said vehicle (10) is jumping and the third predetermined time period (st3) is elongated, but only when the rotational acceleration (AF; AR) of the wheel becomes a positive wheel rotational acceleration higher than a second predetermined value (Ast2) before the third predetermined time period (st3) elapses, the antilock brake control is not inhibited.

4. An antilock brake controlling method for performing antilock brake control of a vehicle (10), which includes a plurality of wheels (14, 22), a brake apparatus (48, 54) provided for each of at least one driving wheel (22) and one driven wheel (14) from among said wheels, and an antilock brake control apparatus (116) provided for the brake apparatus, in response to a situation of a road surface on which said vehicle travels based on rotational speeds of the wheels detected by wheel speed sensors (108, 111) for the wheels individually provided in the antilock brake control apparatus (116),
wherein it is discriminated by an off road discrimination section (156) whether or not the situation of the road surface is an off road, and based on the discrimination, the antilock brake control is changed over by an antilock control method changeover section (157; 171) between a normal traveling antilock brake control mode for traveling on a road surface having a high coefficient of friction such as pavement and an off road traveling antilock control mode for traveling on a road surface having comparatively great roughness and having a low coefficient of friction such as a gravel road,
**characterized in that**
said antilock brake controlling apparatus (116) includes a suspension elongation length detection section (151) for detecting the length of elongation (SL) of a suspension (13), and
in the normal traveling antilock control mode, the rotational speed of a wheel A and the rotational speed of another wheel B are detected, and the antilock brake control is inhibited where the rotational speed of the wheel A is lower than the rotational speed of the wheel B or the period of time within which the rotational speed of the wheel A is higher than the rotational speed of the wheel B exceeds a first predetermined time period (st1) and besides,
when any of said wheels is braked, where the vehicle speed (W) exceeds a predetermined value (Vst) for a third predetermined time period (st3) after the rotational speed of the wheel is slowed down to become lower than a preset minimum wheel rotational speed (VL), the antilock brake control is inhibited, but
in the off road traveling antilock control mode, the rotational speed of the wheel A and the rotational speed of the wheel B are detected and, even if the rotational speed of the wheel A is lower than the rotational speed of the wheel B or the period of time within which the rotational speed of the wheel A is higher than the rotational speed of the wheel B exceeds the first predetermined time period (st1), only if the wheel whose rotational speed is lower is the driven wheel (14) and the rotational speed of the last-mentioned wheel (14) is lower than a preset minimum wheel rotational speed (VL) for a second predetermined time period (st2), it is determined that said vehicle (10) is stuck and the antilock brake control is not inhibited or inhibition starting time at which the antilock brake control is to be inhibited is postponed, and besides,
when any of said wheels is braked, even if the vehicle speed (VV) exceeds the predetermined value (Vst) for the third predetermined time period (st3) after the rotational speed of the wheel is slowed down to become lower than the preset minimum wheel rotational speed (VL), only where a state wherein the elongation length (SL) of the suspension (13) detected by said suspension elongation length detection section (151) is greater than a predetermined value (Sst) is maintained for a fourth predetermined time period, it is determined that said vehicle (10) is jumping and the antilock brake control is not inhibited or inhibition starting time at which the antilock brake control is to be inhibited is postponed.

## Patentansprüche

1. Antiblockierbremssteuerungsverfahren zur Durchführung einer Antiblockiersteuerung/regelung eines Fahrzeugs (10), das eine Mehrzahl von Rädern (14, 22), eine Bremsvorrichtung (48, 54), die für jedes von zumindest einem Antriebsrad (22) und zumindest einem angetriebenen Rad (14) von den Rädern vorgesehen ist, sowie eine Antiblockierbremssteuerungsvorrichtung (116), die für die Bremsvorrichtung vorgesehen ist, enthält, in Antwort auf eine Situation einer Straßenoberfläche, auf der das Fahrzeug fährt, basierend auf Drehzahlen der Räder, die von in der Antiblockierbremssteuerungsvorrichtung (116) einzeln vorgesehenen Raddrehzahlsensoren (108, 111) für die Räder (1) erfasst werden,
worin durch einen Offroadbestimmungsabschnitt (156) bestimmt wird, ob die Situation der Straßenoberfläche abseits der Straße ist oder nicht, und basierend auf der Bestimmung die Antiblockierbremssteuerung durch einen Antiblockiersteuerverfahrenumschaltabschnitt (157; 171) zwischen einem Normalfahrtantiblockierbremssteuermodus zum Fahren auf einer Straßenoberfläche mit hohem Reibungskoeffizienten wie etwa einer befestigten Straße und einem Offroadfahrtantiblockiersteuermodus zum Fahren auf einer Straßenoberfläche mit vergleichsweiser großer Rauigkeit und mit geringem Reibungskoeffizienten wie etwa einer Kiesstraße umgeschaltet wird,
**dadurch gekennzeichnet, dass**.
in dem Normalfahrtantiblockiersteuermodus die Drehzahl eines Rads A und die Drehzahl eines anderen Rads B erfasst werden, und die Antiblockierbremssteuerung verhindert wird, wo die Drehzahl des Rads A niedriger als die Drehzahl des Rads B ist, oder die Zeitdauer, in der die Drehzahl des Rads A höher ist als die Drehzahl des Rads B, eine erste vorbestimmte Zeitdauer (st1) überschreitet, aber im Offroadfahrtantiblockiersteuermodus die Drehzahl des Rads A und die Drehzahl des Rads B erfasst werden und selbst wenn die Drehzahl des Rads A niedriger ist als die Drehzahl des Rads B oder die Zeitdauer, in der die Drehzahl des Rads A höher ist als die Drehzahl des Rads B, die erste vorbestimmte Zeitdauer (st1) überschreitet, nur dann, wenn das Rad, dessen Drehzahl niedriger ist, das angetriebene Rad (14) ist und die Drehbeschleunigung des Rads (AF, AR) für eine zweite vorbestimmte Zeitdauer (st2) niedriger ist als ein Absolutwert einer vorbestimmten negativen Raddrehbeschleunigung (Ast), bestimmt wird, dass das Fahrzeug (10) springt und die Antiblockierbremssteuerung nicht verhindert wird oder eine Verhinderungsstartzeit, bei der die Antiblockierbremssteuerung verhindert werden soll, verzögert wird.

2. Das Antiblockierbremssteuerungsverfahren nach Anspruch 1, **dadurch gekennzeichnet, dass** in dem Offroadfahrtantiblockiersteuermodus die Drehzahl des Rads A und die Drehzahl des Rads B erfasst werden, und selbst wenn die Drehzahl des Rads A niedriger ist als die Drehzahl des Rads B oder die Zeitdauer, in der die Drehzahl des Rads A höher als die Drehzahl des Rads B ist, die erste vorbestimmte Zeitdauer (st1) überschreitet, nur dann, wenn das Rad, dessen Drehzahl niedriger ist, das angetriebene Rad (14) ist und die Drehzahl des Rads für eine zweite vorbestimmte Zeitdauer (st2) niedriger ist als eine vorbestimmte minimale Raddrehzahl (VL), bestimmt wird, dass das Fahrzeug steckengeblieben ist und die Antiblockierbremssteuerung nicht verhindert wird oder eine Verhinderungsstartzeit, bei der die Antiblockierbremssteuerung verhindert werden soll, verzögert wird.

3. Antiblockierbremssteuerungsverfahren zur Durchführung einer Antiblockierbremssteuerung/regelung eines Fahrzeugs (10), das eine Mehrzahl von Rädern (14, 22), eine Bremsvorrichtung (48, 54), die für jedes von zumindest einem Antriebsrad (22) und zumindest einem angetriebenen Rad (14) von den Rädern vorgesehen ist, sowie eine Antiblockierbremssteuerungsvorrichtung (116), die für die Bremsvorrichtung vorgesehen ist, enthält, in Antwort auf eine Situation einer Straßenoberfläche, auf der das Fahrzeug fährt, basierend auf Drehzahlen der Räder, die von in der Antiblockierbremssteuerungsvorrichtung (116) einzeln vorgesehenen Raddrehzahlsensoren (108, 111) für die Räder (1) erfasst werden,
worin durch einen Offroadbstimmungsabschnitt (156) bestimmt wird, ob die Situation der Straßenoberfläche abseits der Straße ist oder nicht, und basierend auf der Bestimmung die Antiblockierbremssteuerung durch einen Antiblockiersteuerverfahrenumschaltabschnitt (157; 171) zwischen einem Normalfahrantiblockierbremssteuermodus zum Fahren auf einer Straßenoberfläche mit hohem Reibungskoeffizienten wie etwa einer befestigten Straße und einem Offroadfahrtantiblockiersteuermodus zum Fahren auf einer Straßenoberfläche mit vergleichsweiser großer Rauigkeit und mit geringem Reibungskoeffizienten wie etwa einer Kiesstraße umgeschaltet wird,
**dadurch gekennzeichnet, dass**
im Normalfahrtantiblockiersteuermodus die Drehzahl des Rads A und die Drehzahl eines anderen Rads B erfasst werden, und die Antiblockierbremssteuerung verhindert wird, wo die Drehzahl des Rads A niedriger ist als die Drehzahl des Rads B oder die Zeitdauer, in der die Drehzahl des Rads A höher ist als die Drehzahl des Rads B, eine erste vorbestimmte Zeitdauer (st1) überschreitet, und wo, wenn eines der Räder gebremst wird, die Fahrzeuggeschwindigkeit (VV) für eine dritte vorbestimmte Zeitdauer (st3) einen vorbestimmten Wert (Vst) überschreitet, nachdem die Drehzahl des Rads so verlangsamt wurde, dass sie niedriger wird als eine vorbestimmte minimale Raddrehzahl (VL), aber
in dem Offroadfahrtantiblockiersteuermodus die Drehzahl des Rads A und die Drehzahl des Rads B erfasst werden, und selbst wenn die Drehzahl des Rads A niedriger ist als die Drehzahl des Rads B oder die Zeitdauer, in der die Drehzahl des Rads A höher ist als die Drehzahl des Rads B, die erste vorbestimmte Zeitdauer (st1) überschreitet, nur dann, wenn das Rad, dessen Drehzahl niedriger ist, das angetriebene Rad (14) ist und die Drehzahl des zuletzt erwähnten Rads (14) für eine zweite vorbestimmte Zeitdauer (st2) niedriger ist als eine vorbestimmte minimale Raddrehzahl (VL), bestimmt wird, dass das Fahrzeug (10) stecken geblieben ist und die Antiblockierbremssteuerung nicht verhindert wird oder die Verhinderungsstartzeit, zu der die Antiblockierbremssteuerung verhindert wird, verzögert wird, und
wenn eines der Räder gebremst wird, selbst wenn die Fahrzeuggeschwindigkeit (VV) den vorbestimmten Wert (Vst) für die dritte vorbestimmte Zeitdauer (st3) überschreitet, nachdem die Drehzahl des Rads verlangsamt wurde, so dass sie niedriger wird als die vorbestimmte minimale Raddrehzahl (VL), wenn ein Absolutwert einer negativen Raddrehbeschleunigung (AF, AR), wenn die Drehzahl des Rads verlangsamt wird, so dass sie niedriger wird als die minimale Raddrehzahl (VL), niedriger als einer erster vorbestimmter Wert (Ast1) ist, dann bestimmt wird, dass das Fahrzeug (10) springt und die dritte vorbestimmte Zeitdauer (st3) verlängert wird, aber nur dann, wenn die Radbeschleunigung (AF; AR) des Rads zu einer positiven Raddrehbeschleunigung wird, die höher ist als ein zweiter vorbestimmter Wert (Ast2), bevor die dritte vorbestimmte Zeitdauer (st3) abläuft, die Antiblockierbremssteuerung nicht verhindert wird.

4. Antiblockierbremssteuerungsverfahren zur Durchführung einer Antiblockierbremssteuerung/regelung eines Fahrzeugs (10), das eine Mehrzahl von Rädern (14, 22), eine Bremsvorrichtung (48, 54), die für jede von zumindest einem Antriebsrad (22) und zumindest einem angetriebenen Rad (14) von den Rädern vorgesehen ist, sowie eine Antiblockierbremssteuerungsvorrichtung (116), die für die Bremsvorrichtung vorgesehen ist, enthält, in Antwort auf eine Situation einer Straßenoberfläche, auf der das Fahrzeug fährt, basierend auf Drehzahlen der Räder, die von in der Antiblockierbremssteuerungsvorrichtung (116) einzeln vorgesehenen Raddrehzahlsensoren (108, 111) für die Räder (1) erfasst werden,
worin, durch einen Offroadbstimmungsabschnitt (156) bestimmt wird, ob die Situation der Straßenoberfläche abseits der Straße ist oder nicht, und basierend auf der Bestimmung die Antiblockierbremssteuerung durch einen Antiblockiersteuerverfahrenumschaltabschnitt (157; 171) zwischen einem Normalfahrtantiblockierbremssteuermodus zum Fahren auf einer Straßenoberfläche mit hohem Reibungskoeffizienten wie etwa einer befestigten Straße und einem Offroadfahrtantiblockiersteuermodus zum Fahren auf einer Straßenoberfläche mit vergleichsweiser großer Rauigkeit und mit geringem Reibungskoeffizienten wie etwa einer Kiesstraße umgeschaltet wird,
**dadurch gekennzeichnet, dass**
die Antiblockierbremssteuerungsvorrichtung (116) einen Aufhängungsdehnungslängenerfassungsabschnitt (151) zum Erfassen der Dehnungslänge (SL) einer Aufhängung (13) enthält, und
im Normalfahrtantiblockiersteuermodus die Drehzahl eines Rads A und die Drehzahl eines anderen Rads B erfasst werden, und die Antiblockierbremssteuerung verhindert wird, wo die Drehzahl des Rads A niedriger ist als die Drehzahl des Rads B oder die Zeitdauer, in der die Drehzahl des Rads A höher ist als die Drehzahl des Rads B, eine erste vorbestimmte Zeitdauer (st1) überschreitet, und
wenn eines der Räder gebremst wird, wo die Fahrzeuggeschwindigkeit (VV) einen vorbestimmten Wert (Vst) für eine dritte vorbestimmte Zeitdauer (st3) überschreitet, nachdem die Drehzahl des Rads verlangsamt wurde, so dass sie niedriger wird als eine vorbestimmte minimale Raddrehzahl (VL), die Antiblockierbremssteuerung verhindert wird, aber im Offroadfahrtantiblockiersteuermodus die Drehzahl des Rads A und die Drehzahl des Rads B erfasst werden, und selbst wenn die Drehzahl des Rads A niedriger ist als die Drehzahl des Rads B oder die Zeitdauer, in der die Drehzahl des Rads A höher ist als die Drehzahl des Rads B, die erste vorbestimmte Zeitdauer (st1) überschreitet, nur dann, wenn das Rad, dessen Drehzahl niedriger ist, das angetriebene Rad (14) ist und die Drehzahl des zuletzt erwähnten Rads (14) für eine zweite vorbestimmte Zeitdauer (st2) niedriger ist als eine vorbestimmte minimale Raddrehzahl (VL), bestimmt wird, dass das Fahrzeug (10) stecken geblieben ist und die Antiblockierbremssteuerung nicht verhindert wird oder die Verhinderungsstartzeit, zu der die Antiblockierbremssteuerung verhindert wird, verzögert wird, und daneben,
wenn eines der Räder gebremst wird, selbst wenn die Fahrzeuggeschwindigkeit (VV) den vorbestimmten Wert (Vst) für die dritte vorbestimmte Zeitdauer (st3) überschreitet, nachdem die Drehzahl des Rads verlangsamt wurde, so dass sie niedriger wird als die vorbestimmte minimale Raddrehzahl (VL), nur wo ein Zustand, in dem die von der Aufhängungsdehnungslängenerfassungsabschnitt (151) erfasste Dehnungslänge (SL) der Aufhängung (13) größer als ein vorbestimmter Wert (Sst) ist, für eine vierte vorbestimmte Zeitdauer beibehalten wird, bestimmt wird, dass das Fahrzeug (10) springt und die Antiblockierbremssteuerung nicht verhindert wird oder die Verhinderungsstartzeit, bei der die Antiblockierbremssteuerung verhindert werden soll, verzögert wird.

## Revendications

1. Procédé de commande de freinage antiblocage pour réaliser une commande de freinage antiblocage d'un véhicule (10), qui comprend une pluralité de roues (14, 22), un appareil de freinage (48, 54) prévu pour chacune d'au moins une roue motrice (22) et une roue entrainée (14) parmi lesdites roues, et un appareil de commande de freinage antiblocage (116) prévu pour l'appareil de freinage, en réponse à une situation d'une surface routière sur laquelle ledit véhicule se déplace sur la base de vitesses de rotation des roues détectées par des capteurs de vitesse de roue (108, 111) pour les roues prévus individuellement dans l'appareil de commande de freinage antiblocage (116),
dans lequel une section de distinction de condition hors route (156) distingue si la situation de la surface routière est hors route ou non, et, sur la base de la distinction, la commande de freinage antiblocage est permutée par une section de permutation de procédé de commande antiblocage (157 ; 171) entre un mode de commande de freinage antiblocage de déplacement normal pour le déplacement sur une surface routière présentant un coefficient de frottement élevé, telle qu'une chaussée, et un mode de commande antiblocage de déplacement hors route pour le déplacement sur une surface routière présentant une rugosité comparativement importante et présentant un faible coefficient de frottement, telle qu'une route de gravier,
**caractérisé en ce que**,
dans le mode de commande antiblocage de déplacement normal, la vitesse de rotation d'une roue A et la vitesse de rotation d'une autre roue B sont détectées, et la commande de freinage antiblocage est désactivée lorsque la vitesse de rotation de la roue A est inférieure à la vitesse de rotation de la roue B ou lorsque la période pendant laquelle la vitesse de rotation de la roue A est supérieure à la vitesse de rotation de la roue B dépasse une première période prédéterminée (st1), mais
dans le mode de commande antiblocage de déplacement hors route, la vitesse de rotation de la roue A et la vitesse de rotation de la roue B sont détectées et, même si la vitesse de rotation de la roue A est inférieure à la vitesse de rotation de la roue B ou si la période pendant laquelle la vitesse de rotation de la roue A est supérieure à la vitesse de rotation de la roue B dépasse la première période prédéterminée (st1), seulement si la roue dont la vitesse de rotation est inférieure est la roue entrainée (14) et si l'accélération de rotation de la roue (AF, AR) est inférieure à une valeur absolue d'une accélération de rotation de roue négative présélectionnée (Ast) pendant une deuxième période prédéterminée (st2), il est déterminé que ledit véhicule (10) saute et la commande de freinage antiblocage n'est pas désactivée ou un temps de commencement de désactivation auquel la commande de freinage antiblocage doit être désactivée est retardé.

2. Procédé de commande de freinage antiblocage selon la revendication 1, **caractérisé en ce que**,
dans le mode de commande antiblocage de déplacement hors route, la vitesse de rotation de la roue A et la vitesse de rotation de la roue B sont détectées et, même si la vitesse de rotation de la roue A est inférieure à la vitesse de rotation de la roue B ou si la période pendant laquelle la vitesse de rotation de la roue A est supérieure à la vitesse de rotation de la roue B dépasse la première période prédéterminée (st1), seulement si la roue dont la vitesse de rotation est inférieure est la roue entrainée (14) et si la vitesse de rotation de la roue est inférieure à une vitesse de rotation de roue minimum présélectionnée (VL) pendant une deuxième période prédéterminée (st2), il est déterminé que ledit véhicule est bloqué et la commande de freinage antiblocage n'est pas désactivée ou un temps de commencement de désactivation auquel la commande de freinage antiblocage doit être désactivée est retardé.

3. Procédé de commande de freinage antiblocage pour réaliser une commande de freinage antiblocage d'un véhicule (10), qui comprend une pluralité de roues (14, 22), un appareil de freinage (48, 54) prévu pour chacune d'au moins une roue motrice (22) et une roue entrainée (14) parmi lesdites roues, et un appareil de commande de freinage antiblocage (116) prévu pour l'appareil de freinage, en réponse à une situation d'une surface routière sur laquelle ledit véhicule se déplace sur la base de vitesses de rotation des roues détectées par des capteurs de vitesse de roue (108, 111) pour les roues prévus individuellement dans l'appareil de commande de freinage antiblocage (116),
dans lequel une section de distinction de condition hors route (156) distingue si la situation de la surface routière est hors route ou non, et sur la base de la distinction, la commande de freinage antiblocage est permutée par une section de permutation de procédé de commande antiblocage (157 ; 171) entre un mode de commande de freinage antiblocage de déplacement normal pour le déplacement sur une surface routière présentant un coefficient de frottement élevé, telle qu'une chaussée, et un mode de commande antiblocage de déplacement hors route pour le déplacement sur une surface routière présentant une rugosité comparativement importante et présentant un faible coefficient de frottement, telle qu'une route de gravier,
**caractérisé en ce que**,
dans le mode de commande antiblocage de déplacement normal, la vitesse de rotation d'une roue A et la vitesse de rotation d'une autre roue B sont détectées, et la commande de freinage antiblocage est désactivée lorsque la vitesse de rotation de la roue A est inférieure à la vitesse de rotation de la roue B ou lorsque la période pendant laquelle la vitesse de rotation de la roue A est supérieure à la vitesse de rotation de la roue B dépasse une première période prédéterminée (st1) et lorsque, quand une quelconque desdites roues est freinée, la vitesse de véhicule (VV) dépasse une valeur prédéterminée (Vst) pendant une troisième période prédéterminée (st3) après que la vitesse de rotation de la roue est ralentie pour devenir inférieure à une vitesse de rotation de roue minimum présélectionnée (VL), mais
dans le mode de commande antiblocage de déplacement hors route, la vitesse de rotation de la roue A et la vitesse de rotation de la roue B sont détectées et, même si la vitesse de rotation de la roue A est inférieure à la vitesse de rotation de la roue B ou si la période pendant laquelle la vitesse de rotation de la roue A est supérieure à la vitesse de rotation de la roue B dépasse la première période prédéterminée (st1), seulement si la roue dont la vitesse de rotation est inférieure est la roue entrainée (14) et si la vitesse de rotation de la roue mentionnée en dernier (14) est inférieure à une vitesse de rotation de roue minimum présélectionnée (VL) pendant une deuxième période prédéterminée (st2), il est déterminé que ledit véhicule (10) est bloqué et la commande de freinage antiblocage n'est pas désactivée ou un temps de commencement de désactivation auquel la commande de freinage antiblocage doit être désactivée est retardé, et
lorsqu'une quelconque desdites roues est freinée, même si la vitesse de véhicule (VV) dépasse la valeur prédéterminée (Vst) pendant la troisième période prédéterminée (st3) après que la vitesse de rotation de la roue est ralentie pour devenir inférieure à la vitesse de rotation de roue minimum présélectionnée (VL), si une valeur absolue d'une accélération de rotation de roue négative (AF, AR) lorsque la vitesse de rotation de la roue est ralentie pour devenir inférieure à la vitesse de rotation de roue minimum (VL) est inférieure à une première valeur prédéterminée (Ast1), alors il est déterminé que ledit véhicule (10) saute et la troisième période prédéterminée (st3) est prolongée, mais seulement lorsque l'accélération de rotation (AF ; AR) de la roue devient une accélération de rotation de roue positive supérieure à une seconde valeur prédéterminée (Ast2) avant que la troisième période prédéterminée (st3) s'achève, la commande de freinage antiblocage n'est pas désactivée.

4. Procédé de commande de freinage antiblocage pour réaliser une commande de freinage antiblocage d'un véhicule (10), qui comprend une pluralité de roues (14, 22), un appareil de freinage (48, 54) prévu pour chacune d'au moins une roue motrice (22) et une roue entrainée (14) parmi lesdites roues, et un appareil de commande de freinage antiblocage (116) prévu pour l'appareil de freinage, en réponse à une situation d'une surface routière sur laquelle ledit véhicule se déplace sur la base de vitesses de rotation des roues détectées par des capteurs de vitesse de roue (108, 111) pour les roues prévus individuellement dans l'appareil de commande de freinage antiblocage (116),
dans lequel une section de distinction de condition hors route (156) distingue si la situation de la surface routière est hors route ou non, et sur la base de la distinction, la commande de freinage antiblocage est permutée par une section de permutation de procédé de commande antiblocage (157 ; 171) entre un mode de commande de freinage antiblocage de déplacement normal pour le déplacement sur une surface routière présentant un coefficient de frottement élevé, telle qu'une chaussée, et un mode de commande antiblocage de déplacement hors route pour le déplacement sur une surface routière présentant une rugosité comparativement importante et présentant un faible coefficient de frottement, telle qu'une route de gravier,
**caractérisé en ce que**
ledit appareil de commande de freinage antiblocage (116) comprend une section de détection de longueur d'allongement de suspension (151) pour détecter la longueur d'allongement (SL) d' une suspension (13), et
dans le mode de commande antiblocage de déplacement normal, la vitesse de rotation d'une roue A et la vitesse de rotation d'une autre roue B sont détectées, et la commande de freinage antiblocage est désactivée lorsque la vitesse de rotation de la roue A est inférieure à la vitesse de rotation de la roue B ou lorsque la période pendant laquelle la vitesse de rotation de la roue A est supérieure à la vitesse de rotation de la roue B dépasse une première période prédéterminée (st1) et, en outre,
lorsqu'une quelconque desdites roues est freinée, quand la vitesse de véhicule (VV) dépasse une valeur prédéterminée (Vst) pendant une troisième période prédéterminée (st3) après que la vitesse de rotation de la roue est ralentie pour devenir inférieure à une vitesse de rotation de roue minimum présélectionnée (VL), la commande de freinage antiblocage est désactivée, mais
dans le mode de commande antiblocage de déplacement hors route, la vitesse de rotation de la roue A et la vitesse de rotation de la roue B sont détectées et, même si la vitesse de rotation de la roue A est inférieure à la vitesse de rotation de la roue B ou si la période pendant laquelle la vitesse de rotation de la roue A est supérieure à la vitesse de rotation de la roue B dépasse la première période prédéterminée (st1), seulement si la roue dont la vitesse de rotation est inférieure est la roue entrainée (14) et si la vitesse de rotation de la roue mentionnée en dernier (14) est inférieure à une vitesse de rotation de roue minimum présélectionnée (VL) pendant une deuxième période prédéterminée (st2), le fait que ledit véhicule (10) est bloqué est déterminé et la commande de freinage antiblocage n'est pas désactivée ou un temps de commencement de désactivation auquel la commande de freinage antiblocage doit être désactivée est retardé, et, en outre,
lorsqu'une quelconque desdites roues est freinée, même si la vitesse de véhicule (VV) dépasse la valeur prédéterminée (Vst) pendant la troisième période prédéterminée (st3) après que la vitesse de rotation de la roue est ralentie pour devenir inférieure à la vitesse de rotation de roue minimum présélectionnée (VL), seulement lorsqu'un état dans lequel la longueur d'allongement (SL) de la suspension (13) détectée par ladite section de détection de longueur d'allongement de suspension (151) est supérieure à une valeur prédéterminée (Sst) est maintenu pendant une quatrième période prédéterminée, il est déterminé que ledit véhicule (10) saute et la commande de freinage antiblocage n'est pas désactivée ou un temps de commencement de désactivation auquel la commande de freinage antiblocage doit être désactivée est retardé.
